# EUROPEAN PATENT APPLICATION

(11) **EP 1 416 759 A1**
(43) Date of publication of application: **06.05.2004**
(21) Application number: 02746147.4
(22) Date of filing: 31.07.2002
(51) Int. Cl.: H04Q 9/00, G06F 13/00

(54) **COMMUNICATION SERVICE PROVIDING SYSTEM AND METHOD**

(30) Priority: 07.08.2001 JP 2001238773; 03.09.2001 JP 2001265527
(71) Applicant: MATSUSHITA ELECTRIC INDUSTRIAL CO., LTD., Kadoma-shi, Osaka 571-8501 (JP)
(72) Inventor: KATAGAWA, Hiromi, Onojo-shi, Fukuoka 816-0983 (JP); HARAGUCHI, Masahiko, Chikushino-shi, Fukuoka 818-0053 (JP); KUDO, Nobuyuki, Kasuya-gun, Fukuoka 811-0114 (JP)
(74) Representative: Grünecker, Kinkeldey, Stockmair & Schwanhäusser Anwaltssozietät
(86) International application number: PCT/JP2002/007789
(87) International publication number: WO 2003/015449

(57) **Abstract**

A network server determines a certain procedure to be executed by household device based on data received from a user terminal, and transmits data for making the household device execute the procedure to the household device by way of data communication through the Internet. Data from the user terminal, which the network server receives for determination of the procedure, represents a data used by the network server for selection of one or more of prescribed procedures to be executed by the household device among a plurality of them stored in the network server. A third party service provider is able to reduce investment on device in establishing a communication network by synergistic use of a home network owned by the homeowner covenanter, which enables it to provide the services extremely inexpensively.

## Description

### FIELD OF THE INVENTION

The present invention relates to a system and method for providing a communication services that are capable of making variety of controls, monitoring and data collections adaptable to the nature of various appliance, for instance, installed in a house and connected to a general-purpose communication network, using a server, which is also connected to the same communication network. Furthermore, the invention relates to a program for providing communication services using a computer.

### BACKGROUND OF THE INVENTION

A conventional method of using communication network, such as a telephone line, to collect data relating to an amount of electric power consumption and/or amount of gas consumption in a house is called "telemeter". Beside the one disclosed in Japanese Patent Laid-Open No.11-294757, there are many different methods, such as those described in Japanese Patent Laid-Open No.2000-48284, No.2000-283816, No.11-247465, and No.2000-511732.

The Patent Publication No.11-294757 discloses a method of measuring amount of consumption of liquid fuel and the like accurately without depending greatly on human work and not needing any complex device on a large scale. For this purpose, a state of consumption of liquid fuel stored in a home tank installed at one end where the liquid fuel is consumed is monitored according to amount of flow measured with a flow meter of the liquid fuel, and information relating to consumption of the liquid fuel that includes at least one of an amount of consumption and a remaining amount of the liquid fuel is transmitted via data transmission network, such as a telephone line, to the other end where the liquid fuel is supplied.

Another Patent Publication No.2000-48284 discloses a method, which is intended to find abnormality within a house by measuring amount of electric power consumption, and comparing a change in the amount of consumption with a prescribed pattern at the same time. To achieve this purpose, an apparatus disclosed in the publication includes: a signal generating device, which is electrically connected to an outlet of the electric power line in a freely detachable manner, and provided with a control panel for signal transmission and a current source for generating an electric current of a certain prescribed pattern and outputting it to the power line when the control panel is operated; signal detection means for monitoring a load current on the power line, and detecting whether the prescribed pattern is included in a pattern of the load current on the power line; and externally notifier means for transmitting detection data of the prescribed pattern to the outside in an event the signal detection means detects the prescribed pattern.

A method of measuring amount of gas consumption described in Publication No.2000-283816 is designed to detect gas leakage and/or left-open gas valve based on a change in the amount of gas consumption being measured at the same time, and to shut off the gas valve automatically while reporting the matter simultaneously to a gas company and the like. For this purpose, a gas meter disclosed in the publication includes a main body of the meter having a fixed gas passage formed therein, a flow-rate sensor for detecting a flow rate of fuel gas that flows through the gas passage, a cutoff valve disposed to the gas passage, leakage indication means for indicating leakage if the fuel gas is leaking, and control means for controlling operation of the cutoff valve and the leakage indication means. A gas leakage detection system of this publication includes a meter-monitoring unit for monitoring status of the gas meter, and communication means for transmitting to the meter-monitoring unit a detection signal, which indicates the status of the gas meter. The control means of the gas meter generates a slow leakage detection signal when such state that a flow rate of the fuel gas passing through the gas passage exceeds a threshold of leakage level, continues beyond a predetermined period of slow leakage detection , and transmits the generated slow leakage detection signal to the meter-monitoring unit via the communication means. The control means operates the leakage indication means when the slow leakage signal is transmitted to the meter-monitoring unit. On the other hand, the control means generates a slow leakage shut-off signal when the slow leakage detection signal is not transmitted to the meter-monitoring unit, so as to shut off the cutoff valve in response to the slow leakage shut-off signal to deter the slow leakage. Accordingly, this ensures safety when any such event takes place as abnormal leaking or a failure of turning off the gas. The abnormal leakage shut-off signal and the failure-to-turn shut-off signal are transmitted to the meter monitoring unit via the communication means, so as to let the gas supplier know that the gas is shut off due to abnormal leakage or a failure to turn off the gas.

Publication No.11-247465 is intended to improve convenience of living in apartment houses and the like by collectively storing essential and expendable goods necessary for households, such as soap cakes, for instance, within the apartment, and by monitoring the inventories to avoid them from running out of the stock. The system disclosed in this publication is a stock system, which includes detection means for detecting remaining quantities of the living necessaries and goods in a stock space where the essential and expendable household goods are collectively stored within the apartment, and the like, and replenishing means for replenishing the living necessaries and goods according to a detected result from the detection means. A variety of different means may be used for the detection means depending on categories of the living necessaries and goods. For instance, it may be accomplished by a superintendent of the apartment house with his/her visual inspection, by use of a meter and the like if they are electrically and/or mechanically detectable through weight, capacity, and the like, or by use of another meter, which may be checked visually by the superintendent, a supplier, a wholesaler and the like, or through any form of communication means. The replenishing means may be such a system that the superintendent or the like make an order of delivery from the supplier or the wholesaler, using any of communication means based upon updated figures of the inventory. Alternatively, it may be a method in which the supplier or the wholesaler takes an order under its own communication monitoring system as discussed above.

In any of the prior art techniques, each of the device subject to measurement is fixed in the house, and the communication means for transmitting the measured results to the center and the like outside of the house must also be fixed in connection with each of the household device under measurement. Even when general-purpose public communication network, such as telephone line, is used as the communication means, a modem in connection to the telephone line and a local number on the telephone line need to be allocated and fixed individually and separately.

In addition, details, such as the device subject to measurement, specifics of the measurement, what are measured, in what circumstances, under what conditions, how the results are communicated, and so on are prescribed in advance, so that the measurements are carried out only in the prescribed manner, and that they can not be modified diversely, flexibly, and/or timely according to any change in the condition and environment of the site.

Furthermore, it is difficult for the communication services provider to offer the communication services at comparatively low cost, since it has a billing administrative function on each network, which requires facilities for every purpose and expenses respectively, as regard to the cost for providing the communication services.

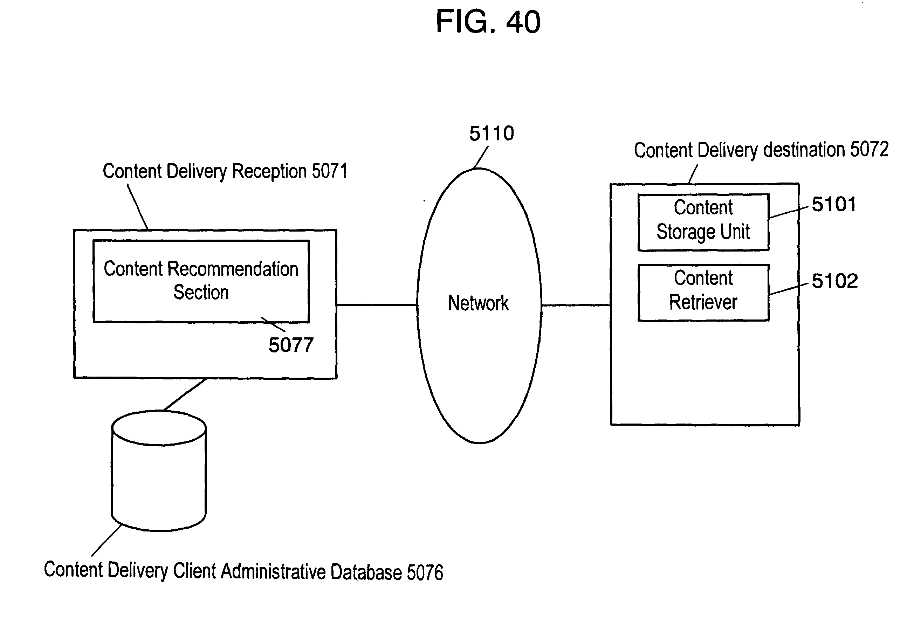

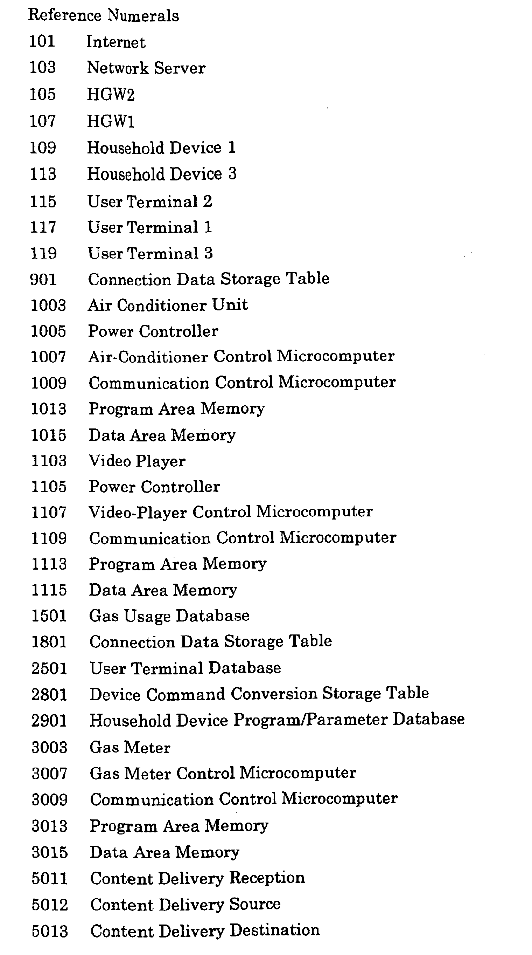

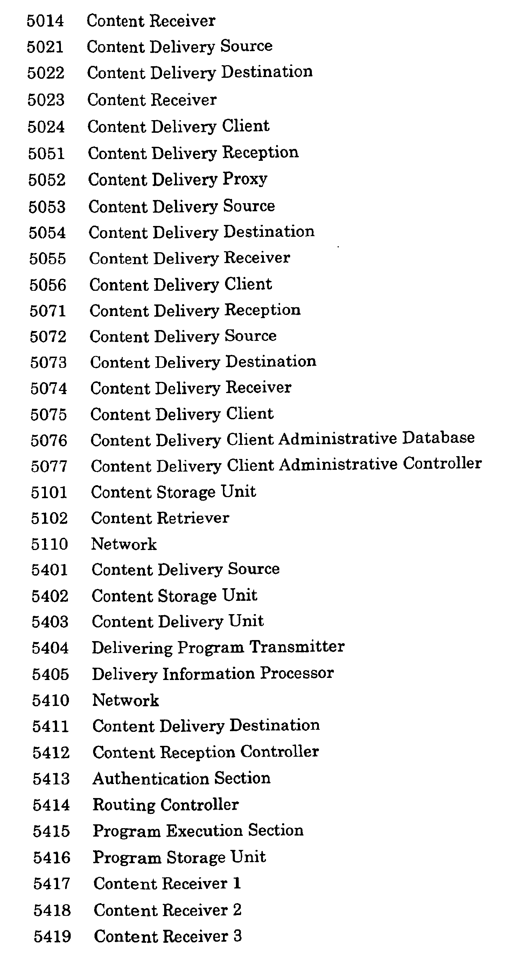

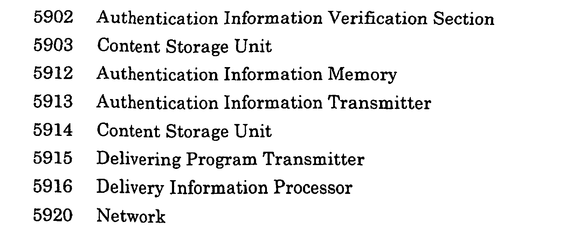

Personal computer ("PC"), job-oriented terminal, and cellular phone are examples of devices used in a content delivery system of the prior art. Described hereinafter is a method of obtaining contents. Fig. 40 shows a content delivery system of the prior art. Content delivery source 5021 has contents in possession. Content delivery destination 5022 is a place to receive contents. Content receiving means 5023 physically receives contents. Content delivery client 5024 requests a delivery of contents.

The content delivery client 5024 sends a request of necessary content to the content delivery source 5021 through the content receiving means 5023 in the content delivery destination 5022. At this time, the content delivery client 5024 registers information required for obtaining the content. The content delivery source 5021 verifies the information input by the content delivery client 5024, and it permits the client to receive the content, and indicates a place where the content is stored, when it determines that the required information was given. The content delivery client 5024 makes access to the place of storage informed by the content delivery source 5021, and retrieves the content by using the content receiving means 5023.

Japanese Patent Laid-Open No.11-341449 discloses another technique of the prior art that enables a user to watch a video content delivered by way of one-to-multiplicity broadcasting in a manner desirable to the user. In the disclosed technique, although the user can change a subject of contents according to his/her choice, the user is required to perform the related manipulation through his/her own receiver unit.

According to the foregoing prior art method, it is necessary for the content delivery client to use content receiving means at the content delivery destination in order to receive contents. In other words, the content delivery client is restricted to receive the contents only in a site where a PC and/or a job-oriented terminal is provided, if he/she is required to use device, such as the PC and job-oriented terminal. Even with the technique disclosed in the Publication No.11-341449, a place where the user receives the contents is limited in the like manner to the site equipped with a receiver unit, since he/she needs to perform necessary manipulation with the receiver unit he/she use to watch the contents. In the case of using such device as a cellular phone, which is not restrictive in location, there still is a limitation in using the device for receiving the contents, since the user must receive the contents with the same device he/she used to request delivery of the contents.

### DISCLOSURE OF THE INVENTION

In a method of providing communication services, a first data processor determines a first procedure to be executed by a second data processor based on data received from a third data processor via a first network, and transmits to the second data processor via the first network first data for use in making the second data processor execute the determined first procedure.

### BRIEF DESCRIPTION OF THE DRAWINGS

Fig. 1 is a structural diagram of a communication network for achieving a communication services providing system and a method of the same according to a first exemplary embodiment of the present invention;
Fig. 2 illustrates a data packet transmitted by a user terminal to a network server according to the first exemplary embodiment;
Fig. 3 illustrates another data packet transmitted by the user terminal to the network server according to the first exemplary embodiment;
Fig. 4 shows a procedure and menu stored in advance in the network server, for which each of household device is directed to execute, according to the first exemplary embodiment;
Fig. 5 illustrates another data packet transmitted by the user terminal to the network server according to the first exemplary embodiment;
Fig. 6 illustrates still another data packet transmitted by the user terminal to the network server according to the first exemplary embodiment;
Fig. 7 illustrates a data packet transmitted by the network server to each of household device in a house, such as air conditioner, and video player, according to the first exemplary embodiment;
Fig. 8 illustrates another data packet transmitted by the network server to the household device, such as air conditioner, and video player, according to the first exemplary embodiment;
Fig. 9 shows a connection data storage table used for managing a connection for communication between the network server and household device, including home gateway ("HGW"), according to the first exemplary embodiment;
Fig. 10 is a block diagram of an air conditioner having two different built-in microcomputers, according to the first exemplary embodiment;
Fig. 11 is a block diagram of a video player having two different built-in microcomputers, according to the first exemplary embodiment;
Fig. 12 illustrates a data packet transmitted by the user terminal to the network server according to the first exemplary embodiment;
Fig. 13 illustrates another data packet transmitted by the user terminal to the network server according to the first exemplary embodiment;
Fig. 14 illustrates a data packet transmitted directly from a gas meter, as a household device, to a computer of a gas company, which represents a user terminal, according to the first exemplary embodiment;
Fig. 15 is a data configuration of gas consumption database according to the first exemplary embodiment;
Fig. 16 illustrates a data packet transmitted by the network server to the computer of the gas company, as the user terminal, according to the first exemplary embodiment;
Fig. 17 shows a sequence of establishing a connection with due regard to the security, according to the first exemplary embodiment;
Fig. 18 a connection data storage table used for managing a connection for communication between the network server and household device, including HGW, according to the first exemplary embodiment;
Fig. 19 illustrates a data packet transmitted by the user terminal to the network server according to the first exemplary embodiment;
Fig. 20 illustrates another data packet transmitted by the user terminal to the network server according to the first exemplary embodiment;
Fig. 21 illustrates a data packet transmitted by the network server to the HGW according to the first exemplary embodiment;
Fig. 22 illustrates another data packet transmitted by the network server to the HGW according to the first exemplary embodiment;
Fig. 23 illustrates a data packet transmitted by a gas meter, as a household device, to the network server according to the first exemplary embodiment;
Fig. 24 illustrates another data packet transmitted by the user terminal to the network server according to the first exemplary embodiment;
Fig. 25 is a configuration of user terminal function database according to the first exemplary embodiment;
Fig. 26 illustrates a data packet transmitted by the network server to the gas meter according to the first exemplary embodiment;
Fig. 27 illustrates another data packet transmitted by the network server to the gas meter according to the first exemplary embodiment;
Fig. 28 shows a device-command conversion storage table according to the first exemplary embodiment;
Fig. 29 shows a database for storing programs and parameters for a household device according to the first exemplary embodiment;
Fig. 30 is a block diagram of a gas meter having two different built-in microcomputers according to the first exemplary embodiment;
Fig. 31 shows a content delivery system according to a second exemplary embodiment of the present invention;
Fig. 32 is a flow chart showing an operation of the content delivery system according to the second exemplary embodiment;
Fig. 33 shows a delivery portion of the content delivery system according to the second exemplary embodiment;
Fig. 34 shows a content delivery system according to a third exemplary embodiment of the present invention;
Fig. 35 is a flow chart showing an operation of the content delivery system according to the third exemplary embodiment;
Fig. 36 shows a content delivery system according to a fourth exemplary embodiment of the present invention;
Fig. 37 is a flow chart showing an operation of the content delivery system according to the fourth exemplary embodiment;
Fig. 38 shows details of a content delivery proxy and a content delivery source of the content delivery system according to the fourth exemplary embodiment;
Fig. 39 shows a delivery reception portion of the content delivery system according to the fourth exemplary embodiment; and
Fig. 40 shows a content delivery system of the prior art.

### THE BEST MODES FOR CARRYING OUT THE INVENTION

### (First Exemplary Embodiment)

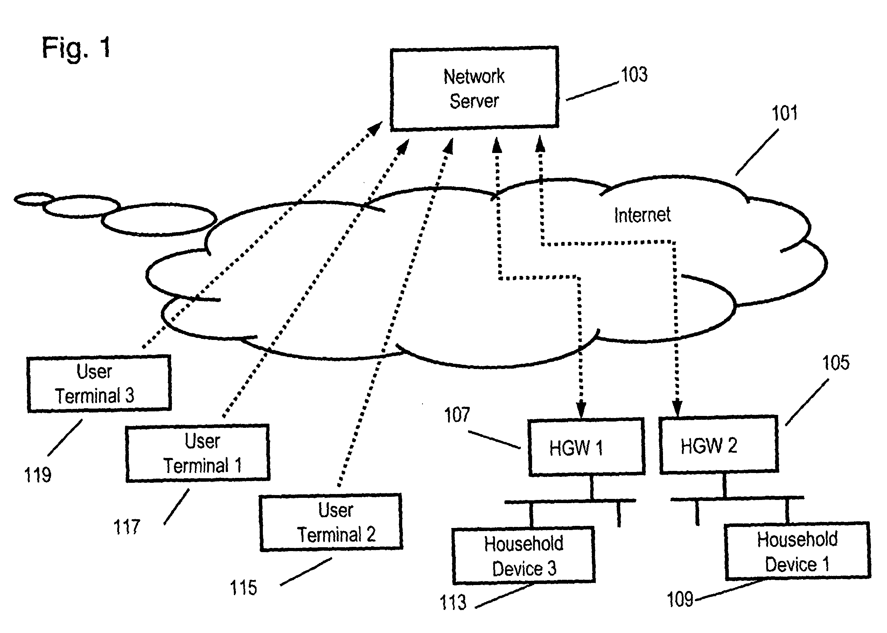

Fig. 1 is structural diagram of a communication network for providing communication service system and a method according to the first exemplary embodiment of this invention. Network server 103 has a function of making data communication with home gateway ("HGW"), which is a data processor, through Internet 101. In other words, the server 103 receives a request by way of data communication over the Internet 101 from any of user terminal 1, user terminal 2 and user terminal 3, that it initiate communication with any of HGW1, HGW2, household device 1 and household device 3, all defining data processors, or directly to any of the household device 1 and the household device 3, also defining data processors, to make it execute a predetermined procedure, and the server 103 actually makes it execute the procedure by communicating with them.

The network server 103 carries out data communication with any of HGW1, HGW2, household device 1 and household device 3 in response to a request of the user terminals 1 through 3, and provides the communication services.

In this first exemplary embodiment, the household device 1 represents an air conditioner installed in the house, and the household device 3 represents a video player placed in another house. Although the air conditioner and the video player are located in separate houses in this embodiment, they may be installed in the same house.

In the first exemplary embodiment, HGW1 and HGW2 assign an household network address to each of the household device 1 and the in household device 3, and manage them so as not to have any home network address duplicated to plural data processing device. HGW1 and HGW2 analyze a destination address of a data packet in the data communication made between the network server 103 and any of the household device 1 and the household device 3, convert the data packet so that it carries a correct destination address of the data processor to which the packet is addressed when they relay the transmission, and route the data packet to the designated data processor. On the other hand, HGW1 or HGW2 receives the data packet by itself if it is addressed to any of them, and neither of them relays transmission of the data packet.

Furthermore, the household device 1 and the household device 3 are connected to HGW1 and HGW2 via an ordinary network or household network, and that HGW1 and HGW2 are connected to the outside of house through Internet 101, in this first exemplary embodiment. Or, the household device 1 and the household device 3 may be connected directly to the outside of house, i.e. the network server 103 in particular, via Internet 101, and a HGW is not necessary in this case.

Moreover, although each house is provided with one HGW in the first exemplary embodiment, there may be plural HGW in any single house.

In the first exemplary embodiment, the predetermined procedures to be executed by the HGW1, and HGW2, or the household device 1 and household device 3, as requested over the data communication made from the user terminal 1, user terminal 2 and user terminal 3 via Internet 101, are such procedures as "turning on power supply to the air conditioner at 7:00 pm today, and maintaining a room temperature of 22 °C from that time on" for the air conditioner, and "recording a television program broadcasted on channel 5 from 8:00 pm to 10:00 pm today" for the video player.

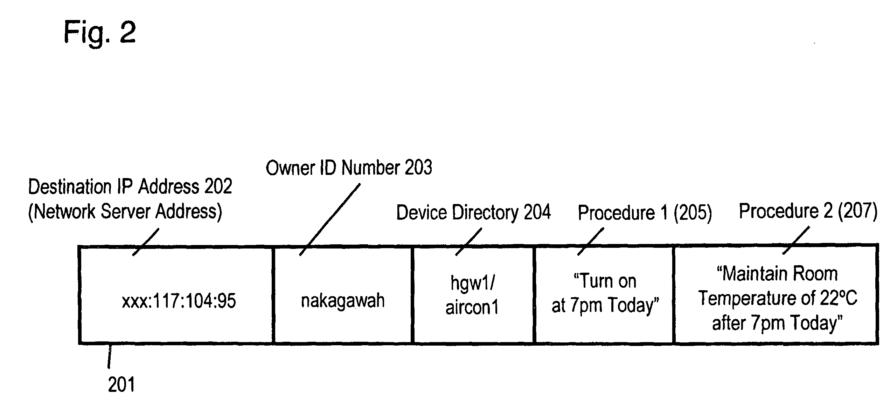

Fig. 2 shows data packet 201 transmitted from one of the user terminal to the network server 103 in order to send a request of the former procedure to the air conditioner.

Internet Protocol ("IP") address 202, or a destination of the data packet 201 is the global address designating the network server 103.

Owner ID number 203, or "nakagawah", is an identification that designates a family having a device subject to control of the procedure. This owner ID number 203 is given by a service provider that manages the network server 103, as a number that does not duplicate in the service operation, at the time the client signs up for the services, as the client owns a HGW and household device and desires to remotely control the device from his/her user terminal. Or, it may be assigned freely by the client, and it is approved for his/her use upon confirmation of its uniqueness.

In addition, the owner ID number is used also as an account number to identify the family and/or an individual for billing control purpose when the service provider collects service fees.

Device directory 204, "hwg1/aircon1" can be divided into a code of "hwg1", which identifies one specific unit of HGW provided within the house of "nakagawah" identified by the owner ID number 203, and another code of "aircon1", which likewise identifies one of air conditioners connected to a home network of the HGW. These codes indicate that this packet 201 is a data packet intended to operate air conditioner 1 connected with the outside through Internet 101 via HGW1 installed in a specified house, so as to make the air conditioner perform a prescribed procedure.

Data 205 in the data packet 201 represents data, which indicates procedure 1 for which the air conditioner 1 designated by the owner ID number 203 and the device directory 204 is directed to perform, and it is a procedure of "turning on power supply at 7:00 pm today" in this exemplary embodiment. Although not explicitly shown in Fig. 2, any procedure, such as the above, is encoded according to a certain predetermined coding scheme to compose the data packet 201, in this and/or other exemplary embodiments.

Procedure 2: 207 in the data packet 201 represents a data indicating procedure 2 for which the air conditioner 1 designated by the owner ID number 203 and the device directory 204 is directed to perform, and it is a procedure of "maintaining a room temperature of 22 °C after 7:00 pm today" in this exemplary embodiment. Similarly, any procedure such as this is also encoded according to the certain predetermined coding scheme to compose the data packet 201, although not explicitly shown in Fig. 2.

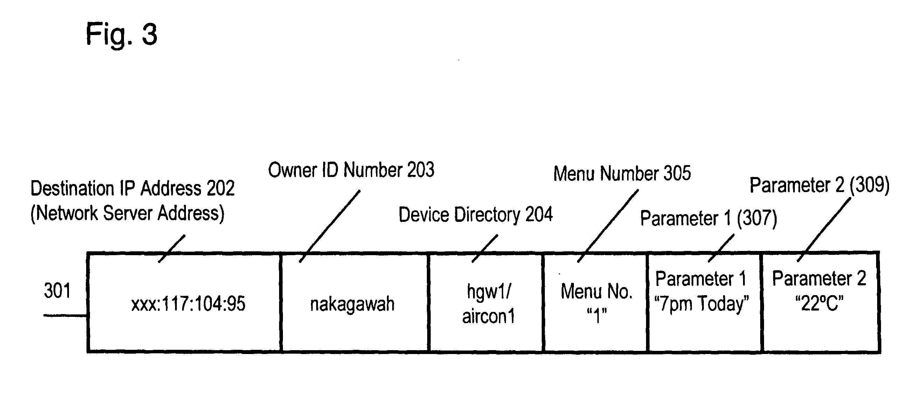

Fig. 3 shows another data packet 301 that the user terminal transmits to the network server 103 in order to request the above procedures to the air conditioner.

Since destination IP address 202, owner ID number 203, and device directory 204 of the data packet 301 are identical to the destination IP address 202, owner ID number 203, and device directory 204 of the data packet 201 respectively, details of them are skipped.

Menu number 305 in the data packet 301 represents a number referred to for selection of a menu among those stored beforehand in the network server 103, and that the menu covers a procedure for which an air conditioner designated by the owner ID number 203 and the device directory 204 is directed to perform.

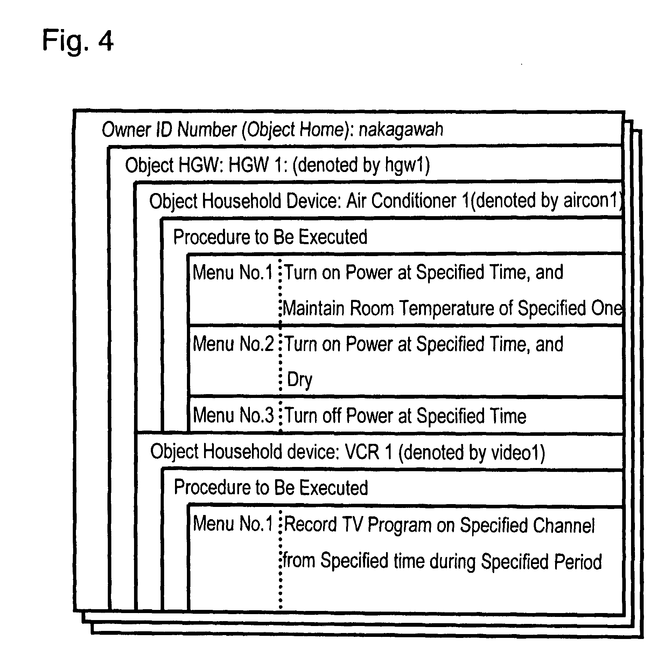

Fig. 4 shows procedures and their menu designed for making a variety of household device to perform, and stored in advance in the network server 103, according to this exemplary embodiment.

In this exemplary embodiment, home gateway HGW1 designated as "hgw1" in the device directory 204 is installed in a subject house named "nakagawah", which is identical to the owner ID number 203 in the family designation, as shown in Fig. 4. The house is equipped with air conditioner 1 designated by "aircon1" in the device directory 204 and video player 1 designated by "video1" in the device directory 504 connected with home gateway HGW1 via a home network.

The air conditioner 1 can execute a procedure of "turning on power supply at a specified time, and maintaining room temperature at a specified degree", a procedure of "turning on power supply at a specified time, and running for dehumidification", and another procedure of "turning off the power supply at a specified time", and these procedures correspond to the menu numbers 1, 2 and 3 respectively.

Video player 1 can be operated for a procedure of "recording a television program broadcasted on a specified channel, from a specified time till another specified time", and this procedure corresponds to menu number 1.

Data packet 301 includes menu number 305 as being "1", which means that the procedure of "turning on power supply at a specified time, and maintaining room temperature at a specified temperature", corresponding to the menu number 1 is selected among the procedures that can be directed to the air conditioner 1.

Data 307 in the data packet 301 represents parameter 1 required for the air conditioner 1 to execute the procedure of "turning on power supply at a specified time, and maintaining room temperature at a specified degree", and it shows time when the power supply is to be turned on.

Data 309 in the data packet 301 represents another parameter 2 required for the air conditioner 1 to execute the procedure of "turning on power supply at a specified time, and maintaining room temperature at a specified degree", and it shows a room temperature to be maintained by the air conditioner 1.

Although not explicitly shown in Fig. 3, such menu number 305, data 307, and data 309 are encoded according to a certain predetermined coding scheme when encapsulated into the data packet 301, in the like manner as the afore-said data packet 201.

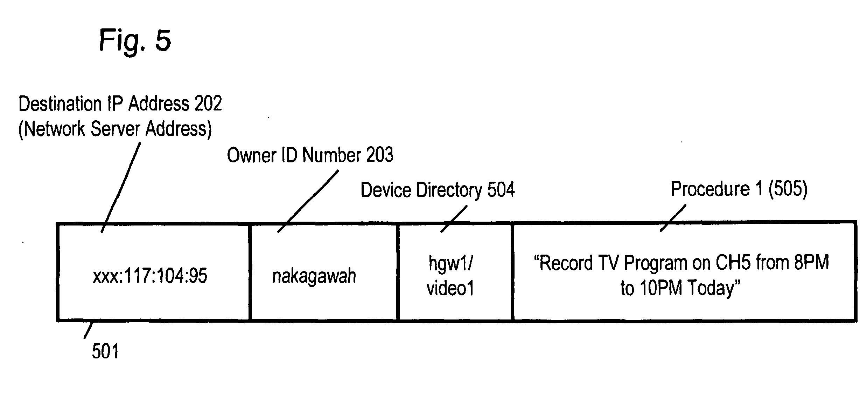

Fig. 5 shows data packet 501 transmitted from the user terminal to network server 103 in order to send a request for the procedure of "recording a television program broadcasted on channel 5 between 8:00 pm and 10:00 pm today" for the video player 1.

Since destination IP address 202 and owner ID number 203 of the data packet 501 are identical to the destination IP address 202 and owner ID number 203 of the data packet 201 respectively, details of them are skipped.

Device directory 504, i.e. "hwg1/video1", can be divided into the code "hwg1", which identifies one specific unit of HGW provided within the house of "nakagawah" identified by the owner ID number 203, and another code "video1", which identifies one of video players connected to a home network of the HGW. The data packet 501 indicates a packet intended to operate the video player 1 connected with the outside through Internet 101 via HGW1 installed in a specified house, so as to make the video player 1 perform a prescribed procedure.

Data 505 in the data packet 501 represents procedure 1 for which the video player 1 designated by the owner ID number 203 and the device directory 204 is directed to perform, and it is a procedure of "recording a television program broadcasted on channel 5 between 8:00 pm and 10:00 pm today" in this exemplary embodiment.

Although not explicitly shown in Fig. 5, any procedure, such as above, is encoded according to a certain predetermined coding scheme when encapsulated into the data packet 501.

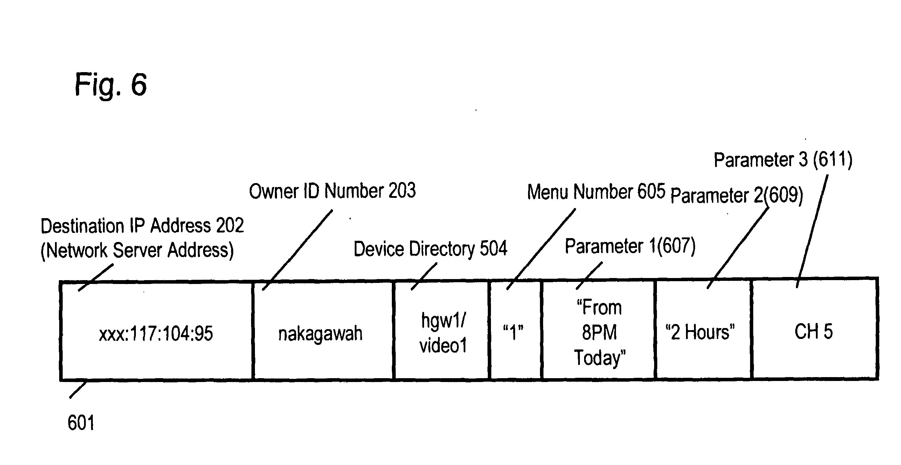

Fig. 6 shows another data packet 601 that the user terminal transmits to the network server 103 in order to send a request of the above procedures to the video player 1.

Since destination IP address 202, owner ID number 203, and device directory 504 of the data packet 601 are identical to the destination IP address 202, owner ID number 203, and device directory 504 of the data packet 501 respectively, their details are skipped.

Menu number 605 in the data packet 601 represents a number referred to for selection of a menu among those stored beforehand in the network server 103, and that the menu covers a procedure for which the video player 1 designated by the owner ID number 203 and the device directory 204 is directed to perform.

Fig. 4 shows a procedure and a menu designed for making the video player to perform, and it is stored in advance in the network server. The video player 1 can be operated for the procedure of "recording a television program broadcasted on a specified channel, starting at a specified time and continued for a specified period of time", and this procedure corresponds to menu number 1.

Data packet 601 includes menu number 605 as being "1", which means that the procedure of "recording a television program broadcasted on a specified channel, starting at a specified time, and continued for a specified period of time" corresponding to the menu number 1, is selected among procedures that can be directed to the video player 1.

Data 607 in the data packet 601 represents parameter 1 required for the video player 1 to execute the above procedure, and it shows time when the recording is to be started.

Data 609 in the data packet 601 represents parameter 2 also required for the video player 1 to execute the above procedure, and it shows a period of time during which the recording is continued.

Data 611 in the data packet 601 represents parameter 3 also required for the video player 1 to execute the above procedure, and it shows a channel of broadcasting station to be tuned for the recording.

Although not explicitly shown in Fig. 6, such menu number 605, data 607, data 609 and data 611 are also encoded according to the certain predetermined coding scheme to compose the data packet 601, in the like manner as the foregoing data packet 501.

When the network server 103 receives the data packet 201, data packet 301, data packet 501, and data packet 601 transmitted from the user terminal, it provides communication service by transmitting a data packet via the Internet to a household device, such as the air conditioner 1 and video player 1, so as to activate any of the air conditioner 1 and video player 1 in the house to execute the task directed by these data packets.

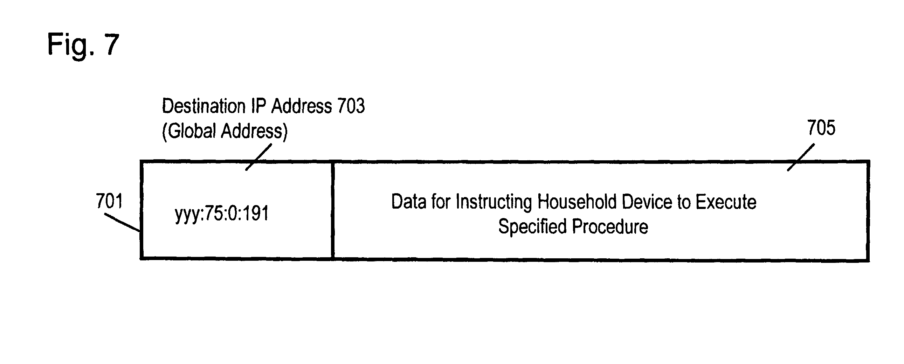

Fig. 7 shows data packet 701 that the network server 103 transmits to the household device, such as the air conditioner 1 and video player 1, for this purpose.

Destination IP address 703 of the data packet 701 indicates an internet address of the household device, such as HGW, video player, and air conditioner, designated by owner ID number 203 and device directory 204 of the data packet 201 and the data packet 301, or by owner ID number 203 and device directories 504 of the data packets 501 and the data packets 601 sent from the user terminal.

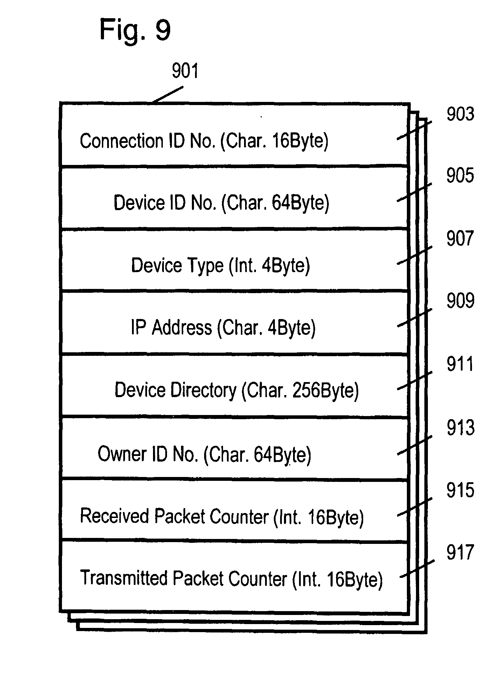

The network server 103 is provided in advance with connection data storage table 901 shown in Fig. 9 for establishing correlation of the HGW and household device designated by the owner ID numbers and the device directories with the IP addresses, or the internet addresses. Table 901 correlates the HGW and household device designated by the owner ID numbers and the device directories with the IP addresses, or the internet addresses. In addition, it implements usage-based billing according to traffic monitoring in the home network and a number of packets gaining access to the household device by means of counting the number of data packets making access to the HGW and household device.

The network server 103 searches through contents of the connection data storage table 901 by using the owner ID number 203 of the data packet received from the user terminal. The server 103 finds device directory 911 within a record of the connection data storage table 901 that corresponds to device directory 204 and/or device directory 504 of the HGW and/or household device for which it has received a request of data transmission to perform a certain procedure, retrieves IP address 909 in the record that includes the device directory 911, and uses the IP address 909 as the destination IP address for the HGW and/or the household device for which it has received the request of data transmission to perform the certain procedure. In addition, the server 103 sets it to set the destination IP address 703 in the data packet 701 transmitted to the HGW and/or the household device.

At the same time, it adds a count of one to transmitted packet traffic counter 917 in the connection data storage table 901. As a result, this enables the server 103 to count a number of data packets transmitted to the concerned household device within a certain period of time, such as an hour, a day or one month, thereby making it possible to calculate an amount of traffic of the transmitted data packets from the network server 103 to any given household device. Moreover, this also enables the server 103 to use the transmitted packet traffic counter 917 for usage-based billing of the communication services for each household device.

The transmitted packet traffic counter 917 is cleared back to zero when the service charge is settled between the client who owns the household device and the communication service provider using the network server 103.

In the case transmitted packet traffic counter 917 is not used for the usage-based billing of the communication services, the transmitted packet traffic counter 917 is cleared in a such timing that is determined depending on a counting period as to when the traffic count ends, and the like.

When the network server 103 receives a data packet from any given household device, it is counted by adding a count of one to received packet traffic counter 915 in the connection data storage table 901.

In the like manner as the transmitted packet traffic counter 917, the received packet traffic counter 915 can be used for calculation of an amount of traffic of the received data packets from any given household device, and also for usage-based billing of the communication services.

The received packet traffic counter 915 is cleared to zero at the same timing as the transmitted packet traffic counter 917.

The network server 103 stores beforehand data 705 for the data packet 701 to direct any household device, such as an air conditioner and a video player, to execute a predetermined procedure, and the data 705 is a data for directing the HGW, air conditioner, video player, and the like to execute the predetermined procedure specified by any of the data 205 and data 207 of the data packet 201, menu number 305, data 307 and data 309 of the data packet 301, data 505 of the data packet 501, and menu number 605, data 607, data 609 and data 611 of the data packet 601 transmitted from the user terminal.

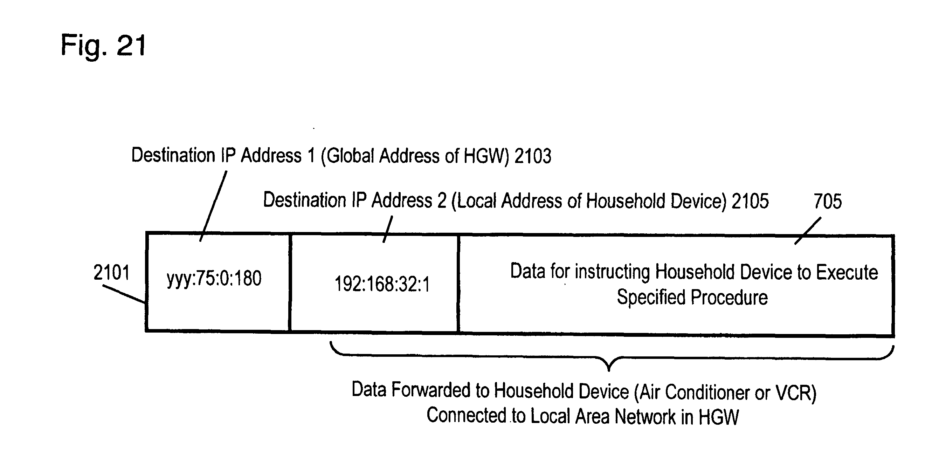

The household device, such as air conditioners and video players, may be connected to a HGW set up within a house through a home network, and these household device as the air conditioners and video players may be in communication with the outside via the Internet 101 through the HGW. Fig. 21 shows data packet 2101, which is transmitted to air conditioner 1 and/or video player 1 in this instance by the network server 103.

Data 2103 in the data packet 2101 is destination IP address 1 representing HGW1, and data 2105 is destination IP address 2 representing one of the household device.

First, the network server 103 selects a connection data storage table for the house corresponding to owner ID number 203 included in the data packet received from the user terminal. Next, the server 103 searches twice through contents of the connection data storage table 901 for the device directories in the classified order, or starting first from "hgw1" on the left, and "video1" next, in the instance of "hwg1/video1" in the device directory 504 of the data packet 501. The server 103 finds device directory of the HGW1 having the household device in connection thereto and another device directory of the household device itself, for which it has received a request of data transmission to perform a certain procedure, within the record of the connection data storage table 901, retrieves IP address 909 in the record that includes the device directory 911, and uses it for setting up a destination IP address for the household device for which it has received the request of data transmission to perform the certain procedure, and for the HGW with which the household device is in connection. In addition, the server 103 uses it to set up an address for data 2103 and another data 2105 in the data packet 2101 to be transmitted to the household device via the HGW.

At the same time, it adds a count of one each to transmitted packet traffic counter 917 in the connection data storage table 901, of which the device directory 911 is "hgw1" and another transmitted packet traffic counter 917 in the connection data storage table 901, of which the device directory 911 is "hgw1/video1". Accordingly, this enables the server 103 to count a number of data packets transmitted to the individual device of HGW1 and the video player 1 within a certain period of time, such as one hour, a day or one month, thereby making it possible to calculate an amount of traffic of the transmitted data packets from the network server 103 to each of the specified household device.

When the network server 103 transmits a data packet to the video player 1 connected with the HGW1 via the home network, it adds a count of one to the transmitted packet traffic counter 917 in the connection data storage table 901, of which device directory 911 is "hgw1", that is, the transmitted packet traffic counter 917 for the HGW1.

Moreover, it is possible to make usage-based billing for the communication services on each unit of the household device, that is, a unit-by-unit basis for the video player 1 and the air conditioner 1, for example, according to the transmitted packet traffic counter 917 for each of the HGW and the transmitted packet traffic counter for each of the household device. Or, it is also possible to make the usage-based billing for the communication services on each of the HGW1.

The transmitted packet traffic counter 917 is cleared back to zero when the billing of the communication services is settled between the client who owns the household device and the provider that renders the communication services using the network server.

In the case transmitted packet traffic counter 917 is not used for the usage-based billing of the communication services, the transmitted packet traffic counter 917 is cleared in a such timing that is determined depending on a counting period as to when the traffic count ends, and the like.

When the network server 103 receives a data packet from certain household device, it is counted by adding one to the received packet traffic counter 915 is incremented by one, in each record for the device directory 911 of "hgw1" and the device directory 911 of "hgw1/video1" on the connection data storage table 901.

In the like manner as the transmitted packet traffic counter 917, the received packet traffic counter 915 can be used for calculation of an amount of traffic of the received data packets from any given household device, and also for usage-based billing of the communication services. Further detail about timing for clearing these traffic counts is not repeated here, since it is same as that of the transmitted packet traffic counter 917.

Data 705 in the data packet 2101 for directing any household device, such as an air conditioner and a video player, to execute a predetermined procedure is identical to the data 705 in the data packet 701, and detail of it will therefore be skipped.

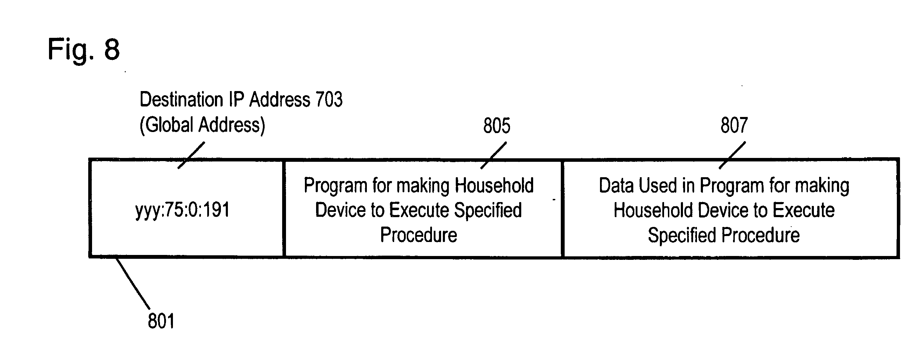

When the network server 103 receives the data packet 201, data packet 301, data packet 501, and data packet 601 transmitted from the user terminal, it renders communication service by transmitting a data packet via the Internet to an household device, such as the air conditioner 1 and video player 1, so as to activate any of the air conditioner 1 and video player 1 in the house to execute tasks directed by these data packets. Fig. 8 shows another data packet 801 transmitted for the purpose of providing communication service to the household device, such as the air conditioner 1 and video player 1.

Destination IP address 703 of the data packet 801 indicates an internet address of the household device, such as HGW, video player, and air conditioner, designated by owner ID number 203 and device directory 204 of the data packet 201 and the data packet 301, or owner ID number 203 and device directories 504 of the data packets 501 and the data packets 601 sent from the user terminal. Further detail is skipped, as it is identical to the destination IP address 703

The transmitted packet traffic counter 917 and the received packet traffic counter 915 on the connection data storage table 901 have the same purposes, compositions, operations, and functions as those described in connection with the data packet 701, and further explanation will therefore be skipped.

The network server 103 stores in advance program 805 for the data packet 801 to direct any household device, such as an air conditioner and a video player, to execute a predetermined procedure, as a program for microcomputer built into the HGW, the air conditioner, the video player and the like, for making the HGW, the air conditioner, the video player and the like execute the predetermined procedure specified by any of the data 205 and data 207 of the data packet 201, menu number 305, data 307 and data 309 of the data packet 301, data 505 of the data packet 501, and menu number 605, data 607, data 609 and data 611 of the data packet 601 transmitted from the user terminal.

The network server 103 also stores in advance data 807 for the data packet 801 used for the program to direct any of the household device, such as the air conditioner and the video player, to execute the predetermined procedure, as a data used to carry out the program for microcomputer built into the HGW, the air conditioner, the video player and the like, for making the HGW, the air conditioner, the video player and the like execute the predetermined procedure specified by any of the data 205 and data 207 of the data packet 201, menu number 305, data 307 and data 309 of the data packet 301, data 505 of the data packet 501, and menu number 605, data 607, data 609 and data 611 of the data packet 601 transmitted from the user terminal.

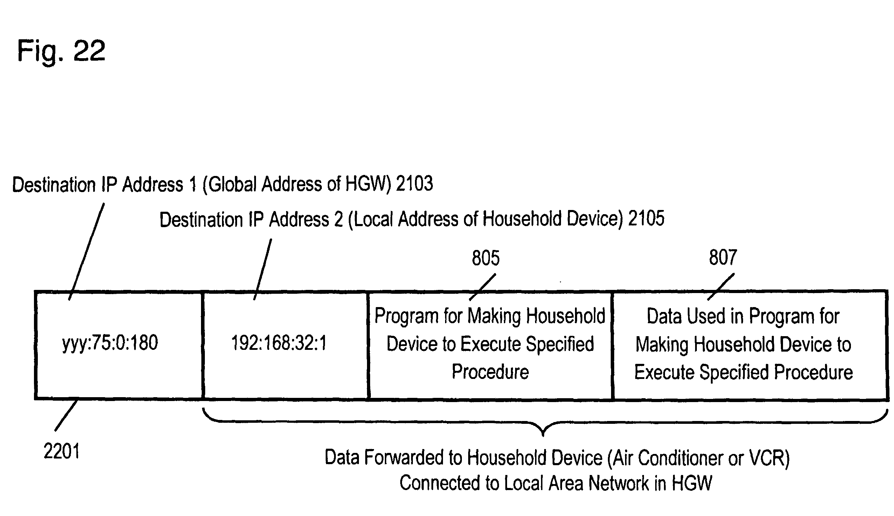

The household device, such as air conditioners and video players, may be connected to a HGW set up within a house through a home network, and these household device as the air conditioners and video players may be in communication with the outside via the Internet 101 through the HGW. Fig. 22 shows data packet 2201, which is transmitted to air conditioner 1 and/or video player 1, in this instance, by the network server 103.

Data 2103 in the data packet 2201 is destination IP address 1 representing HGW1, and data 2105 is destination IP address 2 representing one of the household device.

The manner in which the network server 103 searches through connection data storage table 901, and sets respective address codes to data 2103 and data 2105 in the data packet 2201 is same as the method of setting the address codes to the data 2103 and the data 2105 as described for the data packet 2101, and their details will therefore be skipped.

Furthermore, the transmitted packet traffic counter 917 and the received packet traffic counter 915 on the connection data storage table 901 have the same purposes, compositions, operations, and functions as those already described in connection with the data packet 2101, and thus further explanation will be skipped.

The program 805 in the data packet 2201 to direct any of the household device, such as the air conditioner and the video player, to execute the predetermined procedure, and the data 807 also in the data packet 2201 used to carry out the program for making the household device, such as the air conditioner and the video player, execute the predetermined procedure are identical to the program 805 and the data 807 of the data packet 801, and further explanation will therefore be skipped.

The network server 103 transmits the data packet 701, data packet 2101, data packet 801 and data packet 2201 to the HGW or to the household device, such as the air conditioner and the video player, designated by the owner ID number 203, the device directory 204, another owner ID number 203, and another device directory 204 shown in the data packet 201, data packet 301, data packet 501 and data packet 601 sent from the user terminal.

The communication service is thus rendered to these HGW and/or the household device, such as the air conditioner and the video player, for making them execute the predetermined procedure requested with the data packet 201, data packet 301, data packet 501 and data packet 601.

HGW1 (107), HGW2 (105), household device 1 (109) and household device 3 (113) in Fig. 1 receive the data packet 701, data packet 2101, data packet 801 and data packet 2201 transmitted from the network server 103.

Any of HGW1 (107) and HGW2 (105) receives the data packet 701 and the data packet 801, if their destination IP addresses 703 show any of them, and executes the procedure specified by these data packets.

Any of HGW1 (107) and HGW2 (105) receives the data packet 2101 and the data packet 2201 if their destination IP addresses 1 (2103) show any of them. It then deletes the destination IP address 1 (2103) of the data packet 2101, and converts the destination address 703 of the data packet 701 into same format as the destination address 2 (2105) of the data packet 2101. Likewise, any of HGW1 (107) and HGW2 (105) deletes the destination IP address 1 (2103) of the data packet 2201, and converts the destination address 703 of the data packet 801 into the same format as the destination address 2 (2105) of the data packet 2201. HGW1 (107) and/or HGW2 (105) then forward the data packets through the home network to the household device shown by the destination IP addresses.

In the case where the household device is connected directly to the outside through the Internet without any HGW, the destination IP address 703 of the data packet 701 and the data packet 801 does not indicates the HGW, but the household device, such as air conditioner and video player, that is directly connected to the outside through the Internet. In this case, the household device, such as air conditioner and video player, receives the data packet 701 and the data packet 801 directly through the Internet.

The household device, such as HGW, air conditioner, and video player, designated by the destination IP address 703 and the destination IP addresses 2105 in the data packet 701, data packet 2101, data packet 801 and data packet 2201 receives the data packet 701, data packet 2101 converted into the format of data packet 701 by the HGW, data packet 801, and data packet 2201 converted into the format of data packet 801 by the HGW respectively, through the Internet or another network, such as a home network in addition to the Internet, decodes the contents, and executes the procedure instructed by the contents.

Contents of the data 705 for directing the household device, such as air conditioner and video player, to execute the predetermined procedure, and included in the data packet 701 and the data packet 2101 converted into the same format as the data packet 701 by the HGW, as well as the predetermined procedure to be executed as directed by the contents are stored in advance in the HGW or the household device, such as the air conditioner and the video player, designated by the data packets and the procedure is therefore executable. Thus, any of these household device executes the predetermined procedure according to the contents directed to it.

The program 805 for directing the household device, such as the air conditioner and the video player, to execute the predetermined procedure, and included in the data packet 801 and the data packet 2201 converted into the same format as the data packet 801 by the HGW is loaded into a predetermined area within a predetermined memory by microcomputer 1 built into the HGW or the household device, such as the air conditioner and the video player, designated by the data packets, and it is executed by microcomputer 2 built into the household device, such as the video player.

The data 807 used to carry out the program for directing the household device, such as the air conditioner and the video player, to execute the predetermined procedure, and included in the data packet 801 and the data packet 2201 converted into the same format as the data packet 801 by the HGW is stored in a predetermined area within a predetermined memory by the microcomputer 1 built into the HGW or the household device, such as the air conditioner and the video player, designated by the data packets, and it is used when the built-in microcomputer 2 executes the program.

The microcomputer 1 and the microcomputer 2 built into the above household device, such as the air conditioner and the video player, may be on a common microcomputer, or they may be separate microcomputer.

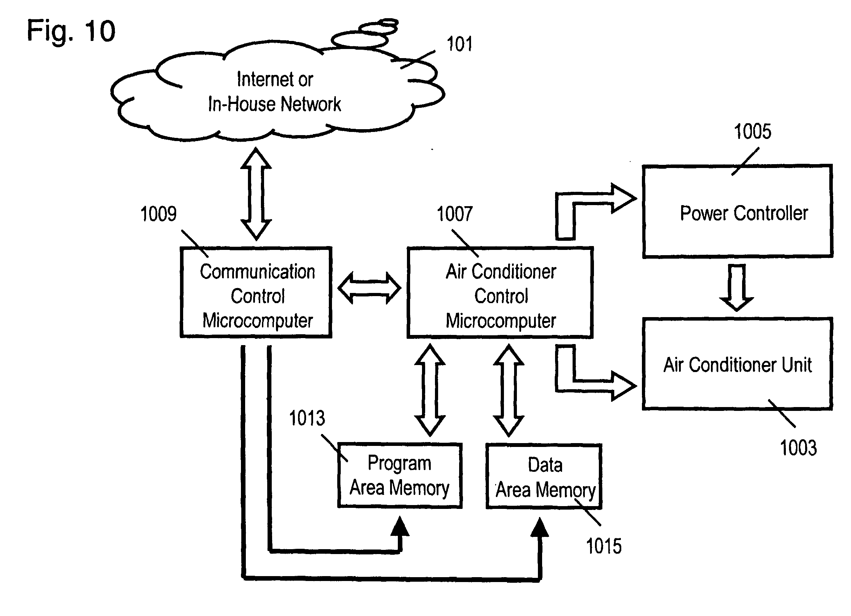

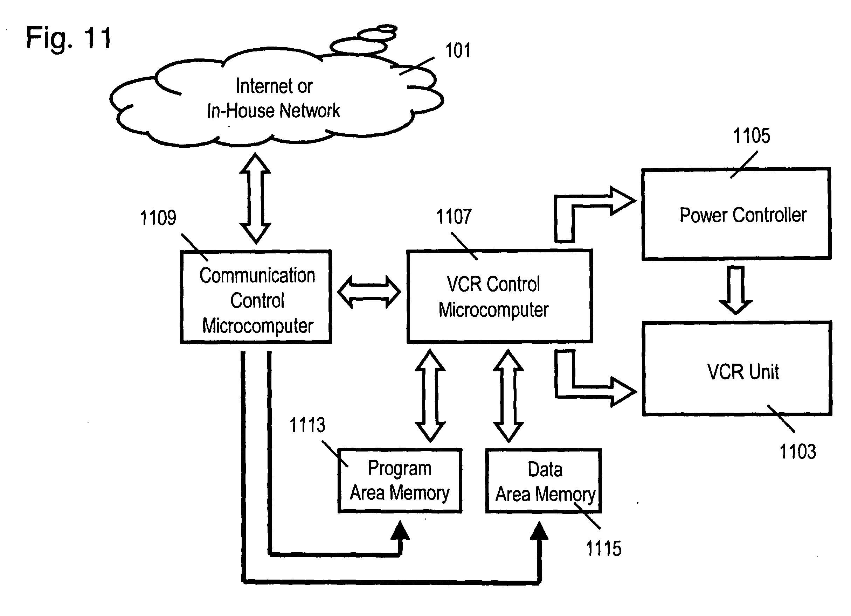

Fig 10 shows a block diagram of the air conditioner, and Fig. 11 shows a block diagram of the video player, both having separate built-in microcomputer 1 and microcomputer 2.

Communication control microcomputer 1009 of Fig. 10 receives either data packet 801 directly from the network server 103 via the Internet 101, or data packet 2201 that is converted into the format of data packet 801 by the HGW and relayed thereto through the home network.

The communication control microcomputer 1009 loads into a predetermined area within program-area memory 1013, program 805 contained in the data packet 801 and/or the data packet 2201, which is converted into the format of data packet 801 by the HGW, for making the air conditioner execute the predetermined procedure. The communication control microcomputer 1009 stores in a predetermined area within data-area memory 1015, data 807 contained in the data packet 801 and/or the data packet 2201 converted into the format of data packet 801 by the HGW, and used to carry out the program 805 for making the air conditioner execute the predetermined procedure.

Air-conditioner control microcomputer 1007 carries out the program loaded into the program-area memory 1013 by using the data stored in the data-area memory 1015, to control power controller 1005 for turning power supply to the air conditioner on and off. The air-conditioner control microcomputer 1007 also carries out the program loaded into the program-area memory 1013 by using the data stored in the data-area memory 1015, to control air conditioner unit 1003 for maintaining room temperature at a given temperature level or for dehumidification. In this exemplary embodiment, the data stored in the data-area memory 1015 defines such data as a time at which power supply to the air conditioner is turned on and/or off, control mode of the air conditioner, such as operation for dehumidification, heating, cooling, air-conditioning by way of a heating and cooling combination, for instance, to maintain the room temperature at a given temperature.

Communication control microcomputer 1109 of Fig. 11 receives either data packet 801 directly from the network server 103 via the Internet 101, or data packet 2201 that is converted into the format of data packet 801 by the HGW and relayed thereto through the home network.

The communication control microcomputer 1109 loads into a predetermined area within program-area memory 1113, program 805 contained in the data packet 801 and the data packet 2201 converted into the format of data packet 801 by the HGW, for making the video player, i.e. the household device, execute the predetermined procedure. The communication control microcomputer 1009 stores in a predetermined area within data-area memory 1115, data 807 contained in the data packet 801 and the data packet 2201 converted into the format of data packet 801 by the HGW, and used to carry out the program 805 for making the video player execute the predetermined procedure.

Video-player control microcomputer 1107 carries out the program loaded into the program-area memory 1113 by using the data stored in the data-area memory 1115, to control power controller 1105 for turning power supply to the video player on and off. The video-player control microcomputer 1107 also carries out the program loaded into the program-area memory 1113 by using the data stored in the data-area memory 1115, to control video player unit 1003 in a manner that it records a television program broadcasted on a specified channel, from a specified time till another specified time. In this exemplary embodiment, the data stored in the data-area memory 1115 defines such data as a time at which power supply to the video player is turned on and/or off, details of how the video player is controlled when recording of a television program is started, another time at which the recording is discontinued and the power supply is turned off, and a broadcasting channel of the television program to be recorded.

The household device connected to the HGW may be a monitor camera set up in a house. In this case, a communication service requested from the user terminal, for instance, is to transmit a real-time image data taken by the monitor camera set up in the house to the user terminal via the HGW. This way, a user is able to see how things stand in his/her house through the image given by the monitor camera set up in the house from anywhere, such as a place of visit and his/her office, for example, so as to take advantage of it for maintaining security of the house, including for example, crime prevention, detection of fire, and the like. The user may use a personal computer, or any other device, such as a portable terminal like Personal Digital Assistance ("PDA" ) and a cellular phone, though display screens of which are somewhat smaller in general and their resolution is poorer than personal computer, as the user terminal for him/her to use from the outside when making a request of transmission of an image of the monitor camera. It may be necessary in the above case that the image data taken by the monitor camera is converted in order to make it compatible with capability of the user terminal.

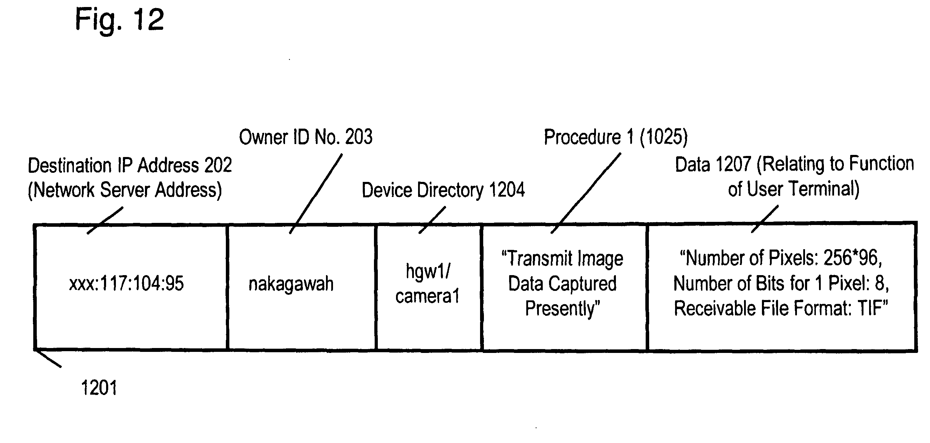

Fig. 12 shows data packet 1201, which the user transmits from the user terminal to the network server 103 when making a request from the place of his/her visit for a communication service that the network server 103 transmit to the user terminal through the HGW an image data presently being taken by the monitor camera, or the household device set up in the house and connected to the HGW.

Explanation for destination IP address 202 and owner ID number 203 of the data packet 1201 is skipped, since they are identical to the destination IP address 202 and the owner ID number 203 of the data packet 201.

Device directory 1204 showing "hwg1/camera1" can be divided into a code "hwg1", which identifies HGW1, or a specific unit among those HGW's provided within the house of "nakagawah" identified by the owner ID number 203, and another code "camera1", which identifies one specific unit of monitor cameras connected to the HGW1 through a home network. They indicate that the data packet 1201 is a packet intended to request the network server 103 to provide communication service of directing the monitor camera 1 connected with the outside through Internet 101 via the HGW1, so as to make the monitor camera 1 perform a prescribed procedure.

Data 1205 of the data packet 1201 indicates procedure 1 for which the monitor camera 1 designated by the device directory 1204 is directed to perform. In this exemplary embodiment, it represents the procedure of "transmitting an image data presently being taken to the user terminal". Although not explicitly shown in Fig. 12, any procedure, such as this procedure 1, is encoded according to the certain predetermined coding scheme to compose the data packet 1201.

Data 1207 in the data packet 1201 refers to a function provided of the user terminal from which the data packet 1201 is transmitted, and it shows that the user terminal has such a basic function and capacity that it is capable of processing image data of the TIF format, and it has a display screen of 256 x 96 in number of pixels, with 8 bits per each pixel.

The image data being taken by the monitor camera 1 is not necessarily compatible with the function of the user terminal requesting the image data, since it depends on the monitor camera 1, or the general-purpose monitor camera, to which the data transmission is made for execution of the procedure 1.

Therefore, the image data taken by this general-purpose monitor camera needs to be converted into a format compatible to the function of the user terminal in respect of the image processing function and image display function, in order to display the image data on the user terminal. The monitor camera is required to have the function of converting image data in many ways in preparation for every conceivable case, if it is to take this task of conversion, since it is unforeseeable as to what function the user terminal has and what format of image data the user terminal requests for transmission. This imposes an excessively heavy burden on the monitor camera, and causes undue increase in cost of the hardware, because this procedure necessitates the monitor camera having a CPU of larger processing capacity, an operational memory of larger capacity, and so on, in order to provide an extra allowance for the required task.

On the other hand, if the user terminal takes the task of converting the image data transmitted from the monitor camera into a format suitable for its own image processing function and image display function, it is also required to have itself prepared for every conceivable case, since it is not foreseeable about what format of image data is transmitted to it. This procedure again imposes an excessive burden on the user terminal, and causes undue increase in cost of the hardware in the like manner as in the case of the monitor camera, if it ever adopts this task.

If, as an example, the user terminal receives image data of which volume exceeds a specification limit anticipated by the user terminal, it is likely that the data overflows a memory area in the user terminal, the user terminal hangs up in operation when the data exceeds a processing capacity of the CPU, or that the user terminal is not able to receive the image data due to a difference in the read-in format.

In this exemplary embodiment, the data 1207 relating to the functions employed in the user terminal, such as image processing function and image display capability, in particular, is included in the data packet 1201 transmitted from the user terminal to the network server 103 for making a request of communication service directing the network server 103 to transmit the image data presently being taken by the monitor camera via the HGW. The network server 103 is thus informed of these functions. As a result, the network server 103 converts the image data taken by the general-purpose monitor camera set up in the house into the format suitable to the image processing function and the image display capability of the user terminal that made the request of data transmission.

In this exemplary embodiment, the data 1207 relating to the functions of the user terminal included in the data packet 1201 includes information that "a number of pixels of a display screen provided in the user terminal is 256 dots x 96 dots", "a number of bits composing each pixel is 8", and "image data format processable by the device is TIF".

In general, the file format and the number of pixels are described in a data header of the image data received from the monitor camera 1. If the monitor camera 1 installed in the house has 1280 dots x 960 dots in number of pixels, with 16 bits per pixel, and uses file format of MPEG for the outgoing image, the user terminal in this exemplary embodiment is unable to display the image because the image file format is different, when the image data taken by the monitor camera 1 is transmitted as it is. In addition, it is likely that the user terminal causes a delay in responding to the image display due to deficiency in its image processing capability and/or it gets stalled in the midst of processing due to a shortage in the memory area for internal processing, if the transmitted image data has an amount that is beyond what is essentially needed for display in the user terminal. It is thus useless for a communication unit to transfer to the user terminal such a large amount of data that is not even displayable.

The network server 103 uses the data 1207 relating to the function and capability of the user terminal included in the data packet 1201 to carry out the process of conversion of the image data from the monitor camera 1 into the format suitable to the display function and display capability of the user terminal.

Although not explicitly shown in Fig. 12, any such data as this data 1207 relating to the function of the user terminal is encoded according to the certain predetermined coding scheme in the same manner as the afore-said procedure 1 (1205) to compose the data packet 1201.

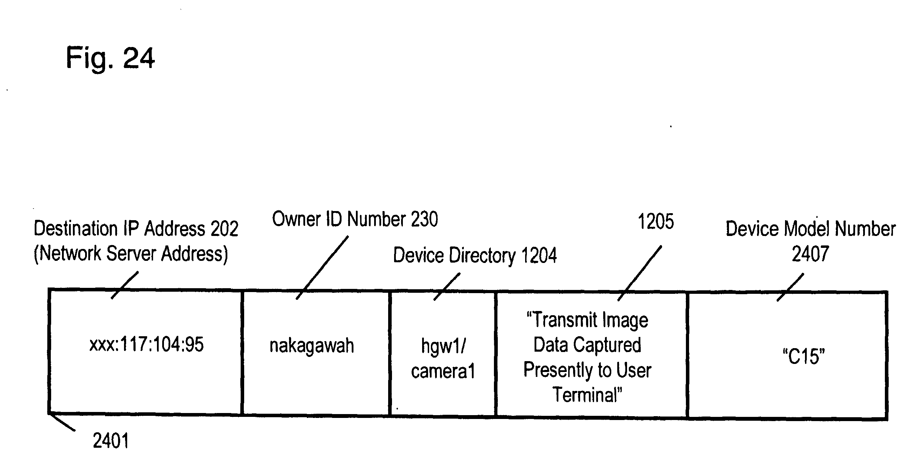

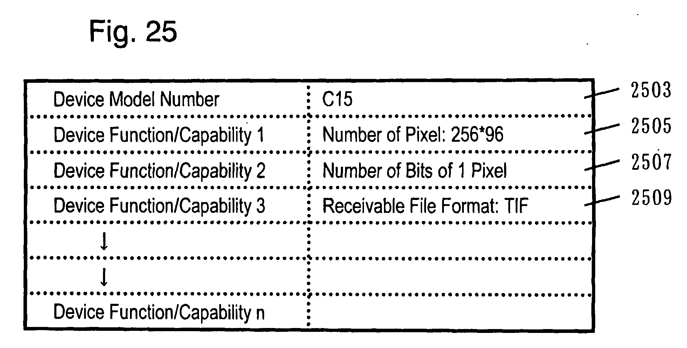

Alternatively, the user terminal may transmit a data packet shown in Fig. 24 to the network server 103, and that the network server 103 may be provided with user terminal function database 2501 shown in Fig. 25.

Explanations for destination IP address 202, owner ID number 203, device directory 1204 and procedure 1 (1205) of the data packet 2401 are skipped, since they are identical to the destination IP address 202, owner ID number 203, device directory 1204 and procedure 1 (1205) of the data packet 1201.

Device model number 2407 of the data packet 2401 represents an device model number (model type) of the user terminal that transmits the data packet 2401.

When the network server 103 receives the data packet 2401, it uses information of the device model number 2407 to search through the user terminal function database 2501 shown in Fig. 25.

The network server 103 refers to device function/capability 1 (2505), device function/capability 2 (2507) and device function/capability 3 (2509) described in a record of the user terminal function database 2501 having device model number 2503 corresponding to the device model number 2407 or in a record of other database that is relationally readable as a result of the search. A number of the device functions/capabilities varies depending on a type of the device. The server 103 converts the image data of the monitor camera 1 into the format suitable for the image processing function and the image display capability of the user terminal.

The user terminal function database 2501 stores device function/capability of the user terminal of which device model number 2503 is shown as "C15". In this exemplary embodiment, the database 2501 stores a number of pixels of the display screen provided in the user terminal, i.e. "256 dots x 96 dots", a number of bits that composes each pixel, i.e. "8", and receivable/processable image file format "TIF", as the device function/capability 1 (2505), device function/capability 2 (2507) and device function/capability 3 (2509) respectively.

The network server 103 uses data of the device function/capability 1 (2505), device function/capability 2 (2507) and device function/capability 3 (2509) relating to the function and capability of the user terminal included in the user terminal function database 2501, to carry out the process of conversion of the image data from the monitor camera 1 into image data of the format suitable to the display function and display capability of the user terminal.

Although not explicitly shown in Fig. 24, such data as the device model number 2407 of the user terminal is also encoded according to the certain predetermined coding scheme to compose the data packet 2401.

The household device connected to the HGW can be a gas meter installed in a house for measuring an amount of gas consumption by a family. A task of the communication service that the user terminal requests is for the network server 103 to demand the gas meter installed in the house to transmit a data representing the amount of gas consumption by the family that is being measured now, to the user terminal through the HGW. A party who operates the user terminal to make such a request to the network server 103 for obtaining communication service of the data is a gas company that supplies gas to this house, or any other provider that is entrusted by the gas company for taking a measurement of gas consumption of this family. The user terminal can be a computer, for instance, belonging to the gas company.

The computer in the gas company or the like sends a request of communication service to the network server 103 for collection of measurement data showing amount of gas consumption in each house from the gas meter installed in the house. Accordingly, the computer can obtain at any time amount of gas consumption of any of the houses where gas is supplied, and this can substantially improve efficiency of work for billing the gas-usage charges.

Besides, it is also possible to find a sign of probable incident taking place in a house and report it to a security company for confirmation of safety, if there is completely no indication of gas consumption only in that day whereas the house normally consumes a certain amount of gas everyday between 6:00 am and 8:00 pm.

It is also possible to suspect an incident of gas leakage, or the like, and to conduct an emergency inspection, if on the contrary, the gas is flowing continuously between 11:00 pm and 3:00 am in which gas is not normally used at all.

In this exemplary embodiment, although the gas meter is taken as an example of the household device, a similar advantage is achievable with like device even if it is an electric meter, a water meter or any other meter that measures an amount of supply consumed in each house.

Since essential structure and function of the invention remain unchanged in an embodiment with these meters, details of the structure and function described hereinafter will pertain only to the case in which a gas meter represents the household device.

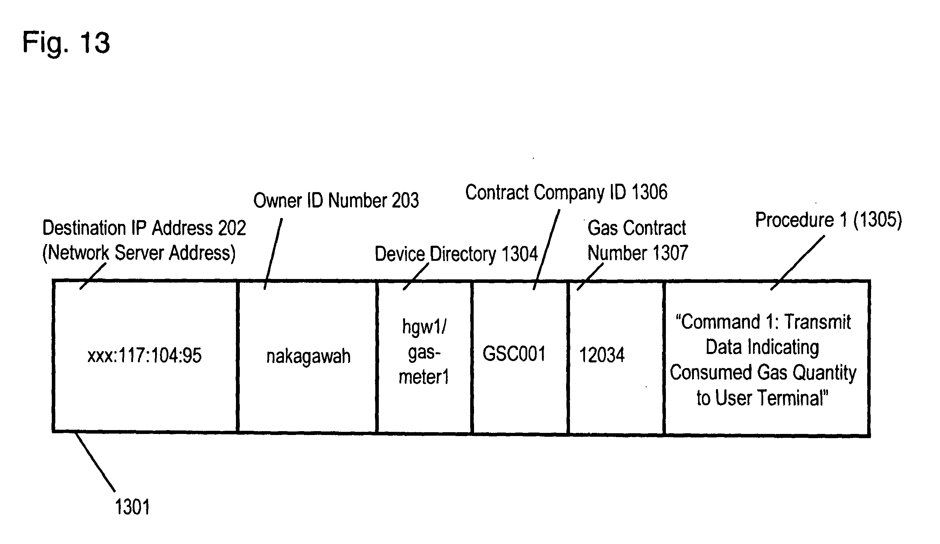

Fig. 13 shows data packet 1301 transmitted from a user terminal, i.e. a computer in a gas company, to the network server 103 when the gas company uses the user terminal to make a request of communication service to the network server 103 for directing a gas meter, i.e. a household device installed in a house and connected to a HGW, to transmit data showing the latest amount of gas consumption via the HGW to the user terminal.

Explanation for destination IP address 202 and owner ID number 203 of the data packet 1301 is skipped, as they are identical to the destination IP address 202 and the owner ID number 203 of the data packet 201.

Device directory 1304 showing "hwg1/camera1" can be divided into a code "hwg1", which identifies HGW1, or a specific unit among a plurality of HGW's provided within the house of "nakagawah" identified by the owner ID number 203, and another code "gas-meter1", which identifies one specific unit of gas meter connected to the HGW1 through a home network. They indicate that the data packet 1301 is a packet intended to request the network server 103 to provide communication service by directing the gas meter 1 connected with the outside through Internet 101 via the HGW1, so as to make the gas meter 1 perform a prescribed procedure.

Contractor ID 1306, or "GSC001" of the data packet 1301 is a contractor identification number for the gas company, and it is assigned when the gas company made a service contract with a provider who operates the data server 103 to provide communication services.

Gas contract number 1307 or "12034" of the data packet 1301 is a contract number determined between the gas company and a home owner when the gas company made a gas sales agreement with the home owner shown by the owner ID number 203.

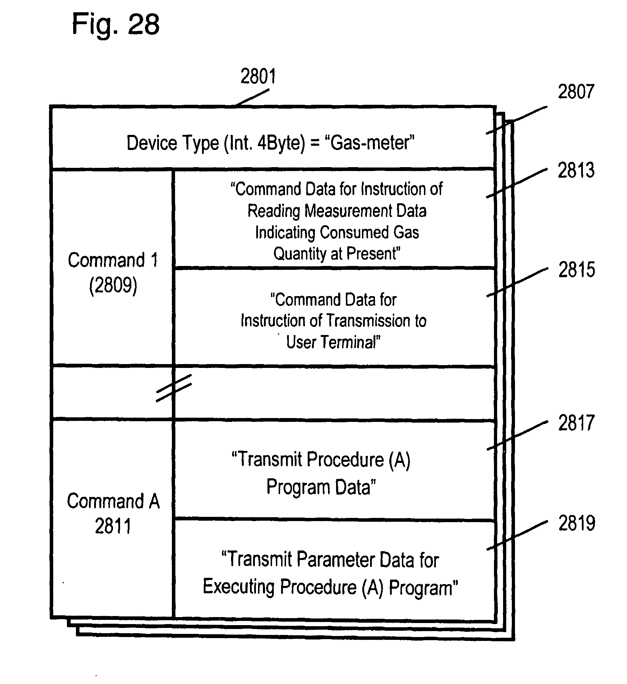

Data 1305 shows "command 1" intended for directing the gas meter 1 specified by the device directory 1304 to perform. In this exemplary embodiment, it is translated within the network server 103 into an actual procedure according to device command conversion storage table 2801 shown in Fig. 28.

Although not explicitly shown in Fig. 13, such procedure 1 is encoded according to a certain predetermined coding scheme, to compose the data packet 1301.

The data packet 1301 is transmitted to the network server 103, and it is translated into the actual procedure according to the device command conversion storage table 2801 shown in Fig. 28, once it is delivered to the network server 103.

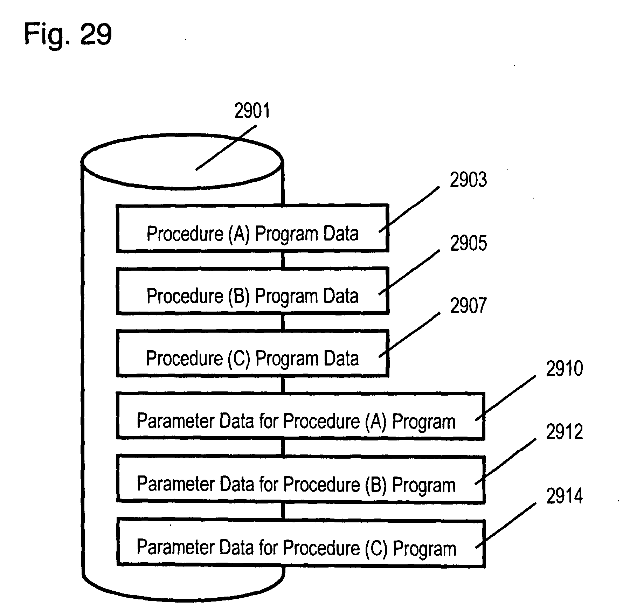

Using the device command conversion storage table 2801 shown in Fig. 28 and the household device program/parameter database 2901 shown in Fig. 29, a procedure will be described in which the data packet 1301 is translated and converted into data packet 2601 or data packet 2701 to be then transferred to the gas meter 1.

First, when the network server 103 translates the data packet 1301 into data packet 2601, it searches through the connection data storage table 901 of Fig. 9 using as search keys the owner ID number 203 of "nakagawah" and the device directory 1304 of "hgw1/gas-meter1" included in the data packet 1301. The server 103 reads device type 907 of the gas meter 1 connected to the HGW1 through the home network. The device type 907 is an identification, which indicates a type uniquely designated to the device, and the server 103 searches through the device command conversion storage table 2801 using this device type 907 as another search key. The device command conversion storage table 2801 has a record structure, which is registered in the device type 2807 as a main index keyword. Sub-index keywords are names of commands indicated as command 1 (2809), command A (2811), and the like. Each command stores control command data unique to the household device specified by device type 2807, and one command is translated into one or more command data unique to that household device.

In the case of data packet 1301, the server 103 retrieves "Gas-meter" corresponding to the device type 907 by searching through the connection data storage table 901, and it refers to a record corresponding to "Gas-meter" under the device type 2807 in the search of the device command conversion storage table 2801.

Next, the server 103 searches through record in the device command conversion storage table by using procedure 1 (1305), i.e. "command 1" of the data packet 1301, as a sub-index keyword, and retrieves "command data for directing read-out of a measurement data indicating the latest amount of gas consumption" under procedure 1 (2813) and "command data for directing transmission of the data to the user terminal" under procedure 2 (2815) recorded in the command 1 (2809).

After determination of the actual command to be directed to the gas meter according to the above steps, the network server 103 generates data packet 2601 for transmission to the gas meter 1.

Explanation for destination IP address 1 (2103) and destination IP address 2 (2605) of the data packet 2601 is skipped, since they are identical to the already described destination IP address 1 (2103) and the destination IP address 2 (2105) in any of the data packet 2101 and the data packet 2201 shown respectively in Fig. 21 and Fig. 22. Destination IP address 2 (2605) is essentially same as the destination IP address 2: 2105, with only a difference of whether it is a household device of air conditioner, video player 1, or gas meter 1.

Contents of the two procedures, procedure 1 (2813) and procedure 2 (2815), retrieved from the device command conversion memory table 2801 are set in the procedure 1 (2607) and procedure 2 (2609) of the data packet 2601. Although two procedures are set in this exemplary embodiment, there can be just one, three, or more procedures to be set depending upon a result of translation of other procedure using device command conversion storage table 2801.

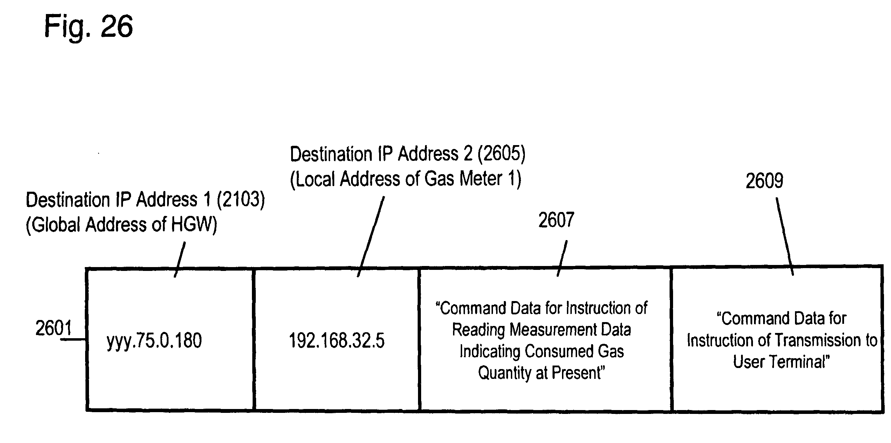

The procedure 1 (2607) and procedure 1 (2609) are encoded according to a certain predetermined coding scheme to compose the data packet 2601, although not explicitly shown in Fig. 26.

The data packet 2601 composed in this manner is transmitted from the network server 103 to the gas meter 1.

Described next is a procedure of translating the data packet 2601 into data packet 2701.

It is assumed in this exemplary embodiment that a task of the procedure 1 (1305) contained in the data packet 1301 is "command A". A procedure of searching through the device command conversion storage table 2801 using the main index key of device type 2807 is same as what has been described in the foregoing procedure of producing the data packet 2601, and detail of it is therefore skipped.

Assuming that the task of procedure 1 (1305) contained in the data packet 1301 is "command A", and when the server 103 searches from command 1 (2809) to command A (2811) corresponding to the sub-index key, it hits command A (2811). Specific tasks of these procedures are "transmission of a procedure (A) program" and "transmission of parameter data necessary for carrying out the procedure (A) program" as described in the procedure 1 (2817) and the procedure 2 (2819) respectively.

These procedure (A) program data and parameter data for the procedure (A) program are then retrieved from household device program/parameter database 2901 shown in Fig. 29.

A number of programs to control a variety of household device and parameter data used exclusively for these programs are stored in advance in the household device program/parameter database 2901.

Fig. 29 shows procedure (A) program data 2903, procedure (B) program data 2905, procedure (C) program data 2907, parameter data 2910 for the procedure (A) program, parameter data 2912 for the procedure (B) program, and parameter data 2914 for the procedure (C) program, to be used exclusively for control of the gas meter.

Using the procedure 1 (2817) and procedure 2 (2819) as a search key read from the record of "command A: 2811", which are the sub-index key hit during the search of device command conversion storage table 2801, the server 103 searches through the household device program/parameter database 2901, and reads actual procedure (A) program data 2903 and parameter data 2910 for the procedure (A) program. The procedure (A) program data 2903 read from the household device program/parameter database 2901 is set in program data 2707 of the data packet 2701, and the parameter data 2910 for the procedure (A) program is set in parameter data 2709 of the data packet 2701.

Explanation for destination IP address 1 (2103) and destination IP address 2 (2605) of the data packet 2701 is skipped, as they are identical to the destination IP address 1 (2103) and the destination IP address 2 (2605) of the data packet 2601.

In this exemplary embodiment, only one each of program data 2707 and parameter data 2709 are used. However, either one of the program data or the parameter data may be used depending upon a result of translation using the device command conversion storage table 2801. Alternatively, two or more of these data can also be used respectively.

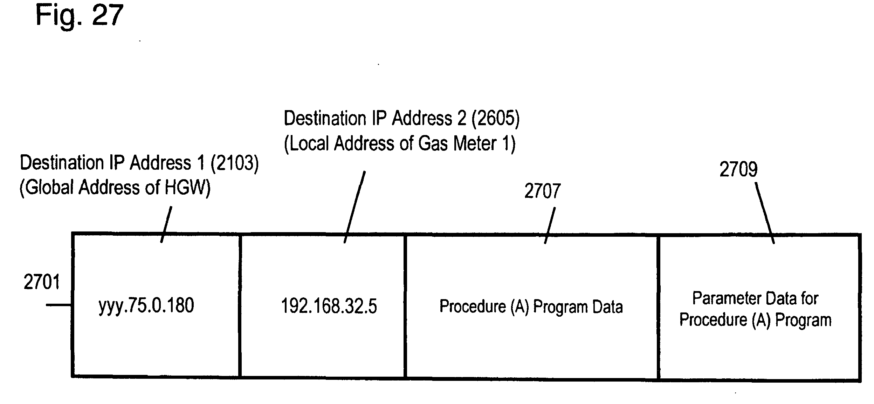

Although not explicitly shown in Fig. 27, such program data 2707 and parameter data 2709 are encoded according to a certain predetermined coding scheme to compose the data packet 2701.

The data packet 2701 produced in this manner is transmitted from the network server 103 to the gas meter 1.

The data packet 2601 transmitted from the network server 103 to the gas meter 1 is received once in the HGW for relay transmission, and its destination address 1 (2103) is removed. A predesignated household device, such as the gas meter, stores in advance predetermined procedures to be executed as indicated by the contents of "command data for directing read-out of a measurement data indicating the latest amount of gas consumption" shown in the procedure 1 (2607) and "command data for directing transmission of the data to the user terminal" shown in the procedure 2 (2609) included in the data packet 2601, which is relayed to the gas meter after being reformatted by replacing the destination address 703 of the data packet 701 with destination address 2 (2605). Each of the household device thus executes the predetermined procedures according to the contents as directed by the above procedures.

The data packet 2701 transmitted from the network server 103 to the gas meter 1 is received once in the HGW for relay transmission, and its destination address 1 (2103) is removed. After the packet 2701 is reformatted by replacing the destination address 703 of the data packet 801 with destination address 2 (2605) of the data packet 2601, and relayed to the gas meter, the procedure (A) program data included in the program data 2707 of this data packet is loaded in a predetermined area of a predetermined memory by microcomputer 1 built into the predesignated household device, such as the gas meter. The program is then executed by microcomputer 2, also built into the household device, such as the gas meter.

The parameter data for the procedure (A) program included in the parameter data 2709 of the relayed data packet is also loaded in a predetermined area of a predetermined memory by the microcomputer 1 built into the predesignated household device, such as the gas meter, and it is used when the microcomputer 2, also built into the household device, executes the program.

The microcomputer 1 and the microcomputer 2 built into the above household device, such as the gas meter, can be in a common microcomputer, or separate microcomputers.

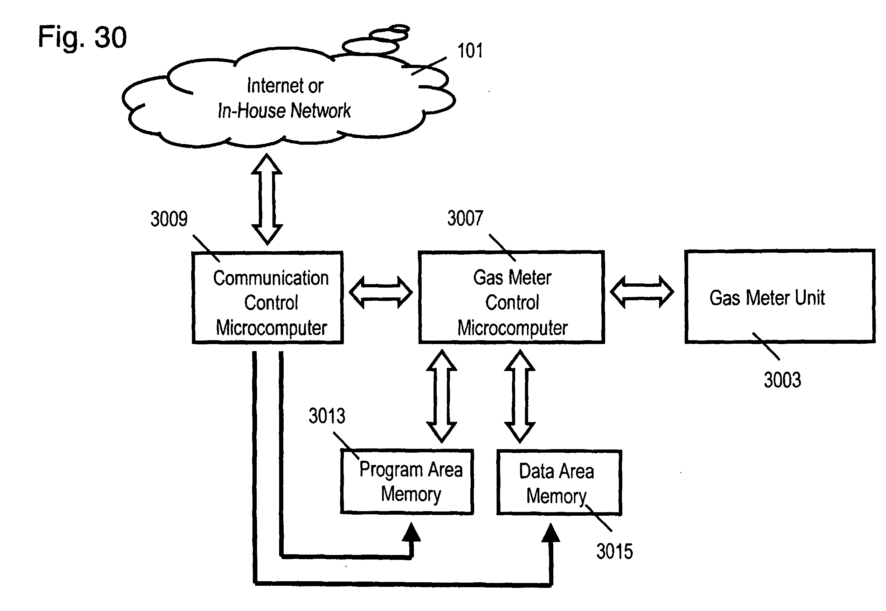

Fig 30 shows a block diagram of the gas meter, which has separate built-in microcomputer 1 and microcomputer 2.

As shown in Fig. 30, communication control microcomputer 3009 receives either data packet 801 directly from the network server 103 via the Internet 101, or data packet 2701 from the HGW in which the packet 2701 is converted into the format of data packet 801 and relayed through the home network.

The communication control microcomputer 3009 loads into a predetermined area within program-area memory 3013, program data 2707 contained in the data packet 2701, which is converted into the format of data packet 801 by the HGW, for making the gas meter defining the household device execute a predetermined procedure. In addition, the communication control microcomputer 3009 stores in a predetermined area within data-area memory 3015, parameter data 2709 also contained in the data packet 2701 and used with the program data 2707 for making the gas meter execute the predetermined procedure.

Gas meter control microcomputer 3007 carries out the program loaded into the program-area memory 3013 by using the data stored in the data-area memory 3015, to read a gauge data from gas meter unit 3003. The gas meter control microcomputer 3007 also carries out the program loaded into the program-area memory 3013 by using the data stored in the data-area memory 3015, to control the gas meter unit 3003 in a manner that it performs a self-diagnosis function, calibration of a detector element contained therein, and the like.

In this exemplary embodiment, the data stored in the data-area memory 3015 include, for examples, data used for making correction of a certain value to the reading obtained from the detector element of the gas meter (i.e. data of correction factor for ambient temperature), a threshold used to make determination in the self-diagnosis, and values of calibration and correction table for use in calibration of the detector element.

At the same time, a count of one is added simultaneously to each of transmitted packet traffic counter 917 in the record of connection data storage table 901, of which device directory 911 is "hgw1", and another transmitted packet traffic counter 917 in the record of connection data storage table 901, of which device directory 911 is "hgw1/gas-meter1".

Accordingly, this enables the network server 103 to count a number of data packets transmitted to the individual device of HGW1 and the gas meter 1 within a certain period of time, such as one hour, a day or one month, thereby making it possible to calculate an amount of traffic of the transmitted data packets from the network server 103 to each of the specified household device.

Even when the network server 103 transmits a data packet to the gas meter 1 connected with the HGW1 via the home network, it adds a count of one to the transmitted packet traffic counter 917 in the record of connection data storage table 901, of which device directory 911 is "hgw1", that is, the count of traffic of the data packets for HGW1. This count of traffic comes to a total number of data packets including those data packets that are relayed through the connections.

In this exemplary embodiment, the transmitted packet traffic counter 917 is used for usage-based billing of the communication services rendered to each unit of the household device. The access fees arising from the gas meter 1 are not charged to the family shown in gas usage database 1501 by family designation 1504 of "nakagawah" where the HGW1 is installed, but it is charged to "gas company A" listed under the contractor's company name 1502 identified by the contractor ID 1510 in the gas usage database 1501. Alternatively, in this exemplary embodiment, the service fees may be charged by the gross according to the count of traffic of the HGW1. If this is the case, the communication service charge needs to be calculated by subtracting counts of the transmitted packet traffic counter 917 in the record of the connection data storage table 901, of which device directory 911 is "hgw1/gas-meter1", from counts of the transmitted packet traffic counter 917 in the record of the connection data storage table 901, of which device directory 911 is "hgw1", when making adjustment of the service charge.

This calculation can be made at the time of adjustment, by referring to the owner ID number 913 and the device directory 911 in the connection data storage table 901, using, as search keys, the family designation 1504 of "nakagawah", the HGW designation 1509 of "hgw1", and the gas meter designation 1513 of "gas-meter1" of the gas usage database 1501.

When the gas meter 1 is referred to in the connection data storage table 901, an device directory of "hgw1/gas-meter1" composed of the HGW designation 1509 of "hgw1" and the gas meter designation 1513 of "gas-meter1" is used as a search key.

Generally, a billing period for the communication service charge to "gas company A" listed under the contractor's company name 1502 identified by the contractor ID 1510 of the gas usage database 1501 differs from a billing period for the communication service charge to the customer, "nakagawah" identified by the owner ID 913 of the connection data storage table 901. It is therefore necessary to clear the counts of transmitted packet traffic counter 917 back to zero in time with the individual billing periods. In the case the transmitted packet traffic counter 917 is not used for the usage-based billing of the communication services, its count is cleared in a such timing that is determined depending on a counting period as to when the traffic count and the like end.

In this embodiment, the received packet traffic counter 915 in the connection data storage table 901 is not counted since the gas meter 1 transmits the data packet 1401 directly to the user terminal of the gas company.

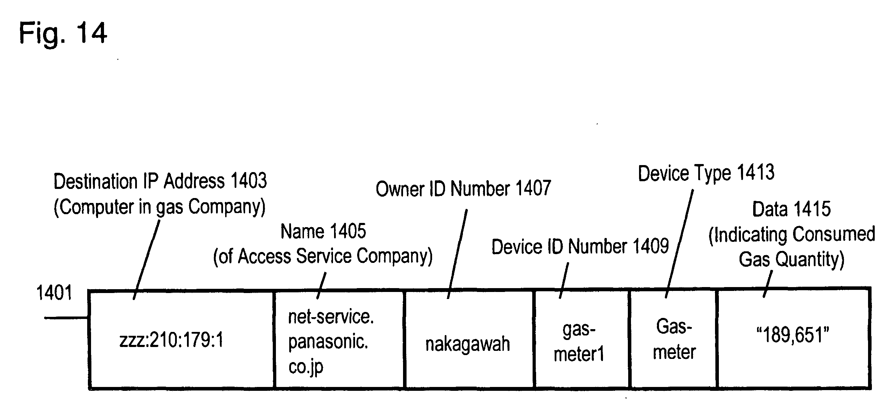

W hen the gas meter 1 receives a data packet, it decodes the contents, proceeds with directed procedures, and transmits the requested data to the designated user terminal. Data packet 1401 sent in the above procedures is shown in Fig. 14.

Destination IP address 1403 of the data packet 1401 indicates an IP address of the user terminal, which is a computer of the gas company that receives this data packet 1401.

In this data packet 1401, access service company name 1405 represents name of the company who provides these communication services, and owner ID number 1407 indicates an identification of a house where the gas meter for measuring gas consumption is installed. Device ID number 1409 is an identification that designates the gas meter for measuring gas consumption. Device type 1413 of the data packet 1401 represents a data, which shows an device type of the gas meter involved in the measurement of gas consumption. Measurement data 1415 of the latest amount of gas consumption means an amount of gas consumption presently being measured by the gas meter 1, to which transmission of the data is requested. The gas meter 1 thus sends back data 1415 to the user terminal in response to the request.

While the data packet 1401 is transmitted directly from the gas meter, or the household device, to the user terminal, i.e. a computer of the gas company, data packet 2301 may be , transmitted to the user terminal, i.e. the computer of the gas company via to the network server 103.

As has been described, when the network server 103 transmits data packet 1301 to the gas meter 1, it adds a count of one simultaneously to each of the transmitted packet traffic counter 917 in the record of connection data storage table 901, of which device directory 911 is "hgw1", and another transmitted packet traffic counter 917 in the record of connection data storage table 901, of which device directory 911 is "hgw1/gas-meter1".

As a result, it makes the network server 103 capable of counting a number of data packets transmitted to the individual device of HGW1 and the gas meter 1 within a certain period of time, such as one hour, a day or one month, thereby making it possible to calculate an amount of traffic of the transmitted data packets from the network server 103 to each of the specified household device.

Even when the network server 103 transmits a data packet to the gas meter 1 connected with the HGW1 via the home network, it also adds a count of one to the transmitted packet traffic counter 917 in the record of connection data storage table 901, of which device directory 911 is "hgw1", that is, the count of traffic of the data packets for HGW1, and this count of traffic comes to a total number of data packets including those data packets relayed through the connections.

In this exemplary embodiment, the transmitted packet traffic counter 917 is used for usage-based billing of the communication services on each unit of the household device. Furthermore, the access fees arising from the gas meter 1 are not charged to the family shown in gas usage database 1501 by family designation 1504 of "nakagawah" where the HGW1 is installed, but it is charged to "gas company A" listed under the contractor's company name 1502 identified by the contractor ID 1510 of the gas usage database 1501. In addition, the service fees are charged by the gross according to the count of traffic of the HGW1 in this exemplary embodiment. It is therefore necessary to subtract counts of the transmitted packet traffic counter 917 in the record of the connection data storage table 901, of which device directory 911 is "hgw1/gas-meter1", from counts of the transmitted packet traffic counter 917 in the record of the connection data storage table 901, of which device directory 911 is "hgw1", when making adjustment of the communication service charge.

This calculation can be made at the time of adjustment, by referring to the owner ID number 913 and the device directory 911 in the connection data storage table 901, using the family designation 1504 of "nakagawah", the HGW designation 1509 of "hgw1", and the gas meter designation 1513 of "gas-meter1" of the gas usage database 1501 as search keys.

When the gas meter 1 is referred to in the connection data storage table 901, an device directory of "hgw1/gas-meter1" composed of the HGW designation 1509 of "hgw1" and the gas meter designation 1513 of "gas-meter1" is used as a search key.

Generally, a billing period for the communication service charge to "gas company A" listed under the contractor's company name 1502 identified by the contractor ID 1510 of the gas usage database 1501 differs from a billing period for the communication service charge to the customer, "nakagawah" identified by the owner ID 913 of the connection data storage table 901. It is therefore necessary to clear the counts of transmitted packet traffic counter 917 back to zero in time with the individual billing periods.

In the case the transmitted packet traffic counter 917 is not used for the usage-based billing of the communication services, its count is cleared in a such timing that is determined depending on a counting period as to when the traffic count ends, and the like.

When the network server 103 receives a data packet from each of the household device, it adds a count of one to each of the received packet traffic counter 915 in the record of connection data storage table 901, of which device directory 911 is "hgw1" , and another transmitted packet traffic counter 917 in the record of connection data storage table 901, of which device directory 911 is "hgw1/gas-meter1".

The received packet traffic counter 915 can be used for calculation of an amount of traffic of the received data packets from each of the household device, and also for the usage-based billing of the communication services, in the like manner as the transmitted packet traffic counter 917.

Also, the received packet traffic counter 915 is cleared to zero at the same timing as that of the transmitted packet traffic counter 917.

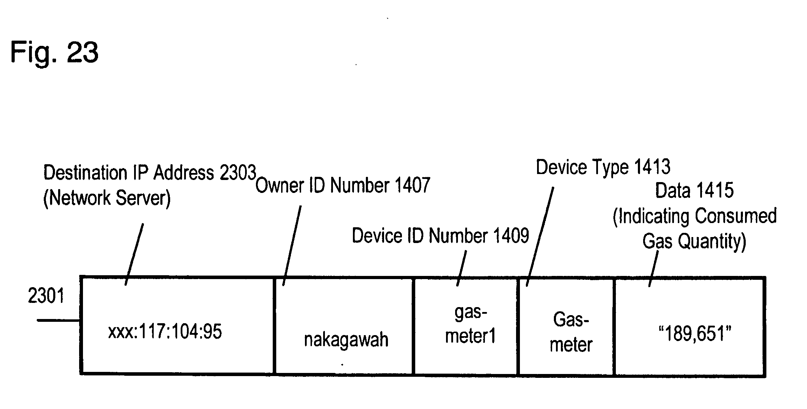

Fig. 23 shows data packet 2301. Destination IP address 2303 of the data packet is an IP address of the network server 103, which is a destination of this data packet.

Detailed descriptions of owner ID number 1407, device ID number 1409, device type 1413, and measurement data 1415 showing the latest amount of gas consumption that compose the data packet 2301 are skipped, since they are analogous to those of the data packet 1401.

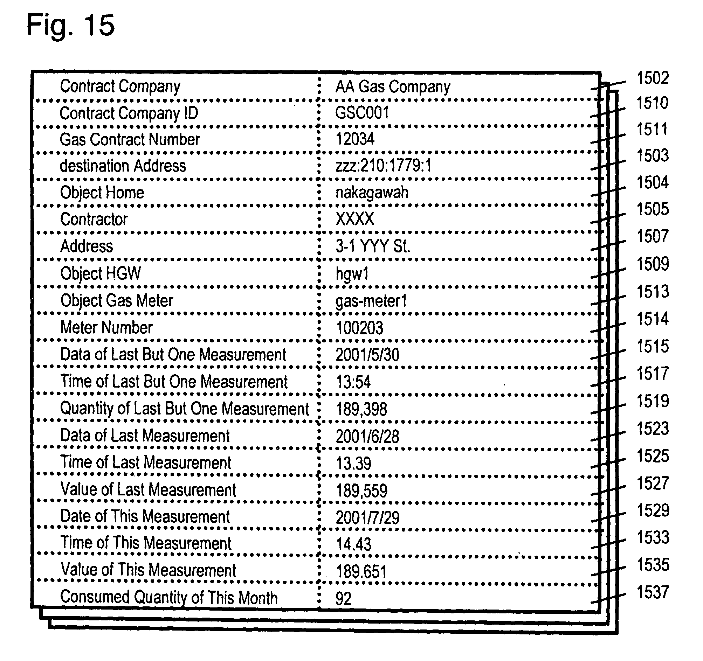

The network server 103 does not simply transmit the data packet 2301 as it is received, to the computer, or the user terminal of the gas company, but upon receipt of the data packet 2301 it decodes the measurement data 1405 representing the latest amount of gas consumption included in the data packet 2301. The server 103 records data relating to the past measurements of gas consumption (i.e. date in year, month, day 1515 of the before-last measurement, time 1517 of the before-last measurement, value 1519 of the before-last measurement, date 1523 of the last measurement, time 1525 of the last measurement, and value 1527 of the last measurement) into data record corresponding to individual covenanter 1505, address 1507, and the like of the family who uses the gas, within the gas usage database 1501 show in Fig. 15, which is prepared when the contract is concluded for providing the communication services between the gas company and the provider who provides these communication services.

The server 103 calculates amount of gas consumption 1537 of this month for the family based on the recorded data and contents of the data packet 2301, updates each item of the data in the gas usage database 1501 according to results of the calculation, and transmits the amount of gas consumption 1537 of this month for the family along with the basic information (covenanter name 1505 and address 1507) relating to this gas-user family to the user terminal, i.e. the computer of the gas company.

Contractor's company name 1502 of the gas usage database 1501 shown in Fig. 15 represents a company who installed the gas meter designated as numeral 1513 in the house of covenanter 1505 and controls it with meter control number 1514, and made an agreement of gas supply contract listed as gas contract number 1511 with the covenanter 1505.

The contractor's company name 1502 shown in Fig. 15 is dealt with by an identifier in the contractor ID 1510 for convenience of the computer processing in the company who operates the data server 103 to provide the communication services.

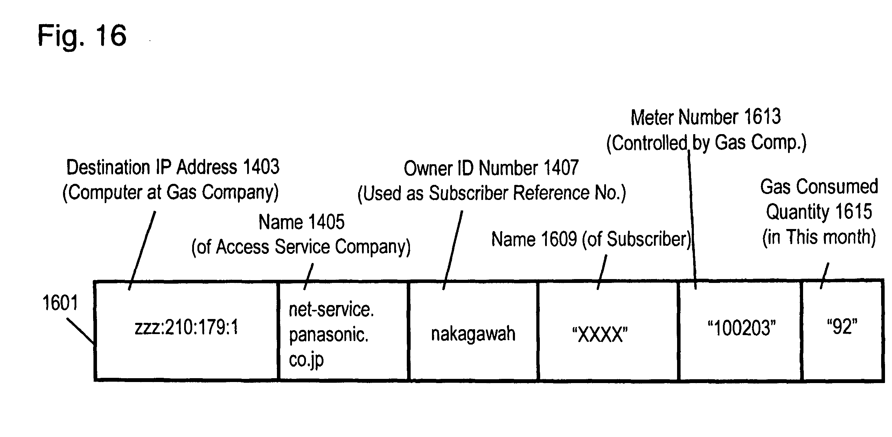

Fig. 16 shows data packet 1601 that the network server 103 transmits to the user terminal, or a computer of the gas company, in this exemplary embodiment.

Destination IP address 1403 of the data packet 1601 is same as the destination IP address 1403 of the data packet 1401, and it is an IP address of the computer of the gas company.

Access service company name 1405 of the data packet 1601 represents name of the company who provides communication services through the network server 103.

Owner ID number 1407 of the data packet 1601 is the one read from a item named family designation 1504 in the gas usage database 1501, and it indicates the house where the gas meter involved in the measurement of gas is installed.

Client name 1609 of the data packet 1601 is read from a item named individual covenanter 1505 in the gas usage database 1501, and he/she is a resident of the house where the gas meter involved for the measurement of gas consumption is installed, and uses the gas under the contract made with the gas company.

Meter number 1613 of the data packet 1601 is read from a item named meter control number 1514 in the gas usage database 1501, and it shows a control number assigned to the gas meter by the gas company involved in the measurement of gas, for the purpose of control by the company.

Amount of gas consumption 1615 of this month in the data packet 1601 is obtained from computation of a difference between the last measurement value 1527 and the latest measurement value 1535 found in the gas usage database 1501, and it is stored in the gas usage database 1501.

The user terminal, i.e. the computer of the gas company, takes an amount of gas consumption for each family by receiving the data packet 1601, and uses it for billing of the gas-usage charge to each family, and for other management statistical data.

In this exemplary embodiment, the network server 103 processes the data packet 2301 by using the gas usage database 1501, converts it into data packet 1601, and transmits to the user terminal.

Alternatively, the network server 103 may simply replace the destination IP address 2303 of the data packet 2301 with IP address 1403 of the data packet 1601, and transmits it as the packet 1601 to the business computer, or the user terminal, of the gas company.

Or, the network server 103 may add access service company name 1405 to the data packet 1601 and convert this packet into packet data similar to that of the data packet 1401, which is transmitted directly to the business computer, or the user terminal of the gas company, by gas meter 1 designated with the gas meter designation of "gas-meter1" when transmitting it.

The network server 103 computes a gas-usage charge from the amount of gas consumption 1537 of this month given in the gas usage database 1501, and makes a procedure of sending a billing invoice for the gas-usage charge and collecting payment of the gas-usage charge by using data, such as the individual covenanter 1505 and address 1507, stored in the same gas usage database 1501.

The gas company can respond promptly, adequately and accurately to inquiries from its clients concerning amount of gas usage, since it has the gas usage database 1501, which stores past records relating to the measurements of gas consumption by their families, including HGW designation 1509, gas meter designation 1513, date in year, month, day 1515 of the before-last measurement, time 1517 of the before-last measurement, value 1519 of the before-last measurement, date 1523 of the last measurement, time 1525 of the last measurement, value 1527 of the last measurement, date 1529 of the latest measurement, time 1533 of the latest measurement, and value 1535 of the latest measurement.

The data packet 201, data packet 301, data packet 501, data packet 601, data packet 1201, data packet 2401 and data packet 1301, which are sent from the user terminal for requesting the network server 103 to provide communication services, directing a HGW or household device to carry out a certain procedure, may be authenticated by the HGW or the household device. Thus, the covenanter can send from his/her user terminal to the network server 103 a request for communication services to turn on and off power supply to an air conditioner, or the household device, to set and maintain room temperature at a desired temperature, to record a television broadcasting program with a video player, to check an image taken by a monitor camera installed in his/her house, and/or to check a reading of a gas meter.

This exemplary embodiment enables the network server 103 to intermediately control data packet communication made by the individual household device, and to control precisely an amount of the data communication of the individual household device.

It not only provides the communication services in which the homeowner covenanter (client) can use his/her user terminal to control the household device from both inside and outside of his/her house, but also gives a so-called "synergistic" service in relation with gas company and gas meter, wherein the gas company as a third party service provider installs the gas meter of its own into a home network already existing in the house of the covenanter (client).

This means that, by using the home network of the covenanter (client) and services of this communication service provider, i.e. an operator of the network server 103, the gas company as the third party is not required to make a large scale investment on device between the gas company and the gas meter, thereby enabling the gas company to provide the homeowner covenanter (client) with gas supply at relatively low price.

This is profitable for both the third party gas company and the covenanter (client).

On the other hand, there is a risk of unexpected damages such as the air conditioner operated mischievously, the video player abused, an inside of room illicitly peeped at with the monitor camera, and an amount of gas consumption wrongfully checked by any unauthorized person, if access to communication services, such as the above, are permitted limitlessly to anyone, or if everyone can make a request of the services freely. Especially, every person's privacy is not at all guaranteed.

Thus, authentication is made on the data packet 201, data packet 301, data packet 501, data packet 601, data packet 1201, data packet 2401 and data packet 1301, which are sent from the user terminal to request the network server 103 provide communication services, to check whether they are legitimate or not. As a result, only legitimate requests are accepted, and only the data packet 701, data packet 2101, data packet 801 and data packet 2201 corresponding to the legitimate requests are transmitted to the HGW and the household device, while intercepting any other requests of undesired access to the household device and demand for carrying out mischievous operation are successfully intercepted. The above embodiment can thus protect the privacy and ensure security of the client.

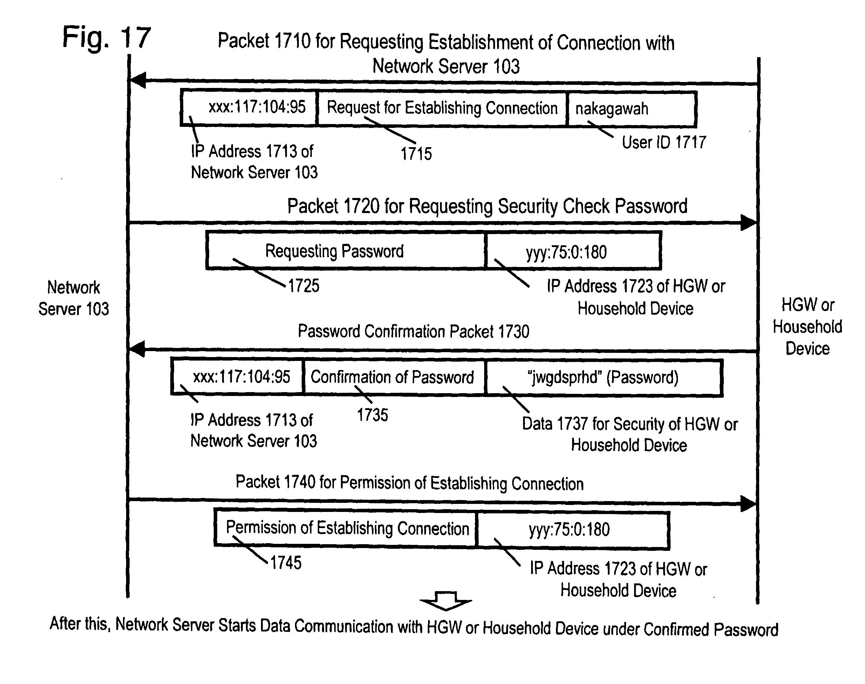

In this exemplary embodiment, the HGW or the household device performs the authentication of the data packets sent from the user terminal for requesting the network server 103 to provide the communication services of directing the HGW or the household device to carry out certain procedure of operation. For this purpose, the HGW and/or the household device transmits data 1737 to the network server 103 in order to ensure their security, during an initial sequence in which the HGW and/or the household device requests the network server 103 to establish a connection. Fig. 17 shows the sequence for establishing the connection.

Packet 1710 for requesting establishment of a connection with the network server 103 contains IP address 1713 of the network server 103. This packet 1710 directs the data packet 1710 itself to be transmitted to the network server 103 via the Internet.

Connection establishment command 1715 of the packet 1710 for requesting establishment of a connection with the network server denotes that this data packet demands the network server 103 to establish a connection for communication.

User ID1717 of the data packet 1710 for requesting establishment of a connection with the network server denotes a resident or owner of a house where the household device or the HGW transmitting this data packet is installed.

Upon receipt of the packet 1710 for requesting establishment of a connection, the network server 103 transmits packet 1720 to request a security check password to the household device or the HGW that transmitted this packet 1710.

The packet 1720 for requesting security check password contains IP address 1723 that designates the HGW or the household device, as a destination of the packet 1720.

Password request 1725 of the packet 1720 for requesting the security check password indicates that this data packet requests the HGW or the household device to transmits a password for use in authentication of the request for communication services made from the user terminal.

When the HGW or the household device receives the packet 1720 for requesting security check password, it transmits back to the network server 103 password confirmation packet 1730 which contains the password for use in the authentication of the request for communication services from the user terminal.

Password confirmation 1735 of the password confirmation packet 1730 indicates that this data packet is to request the password for confirmation of the password.

Data 1737 in the password confirmation packet 1730 for ensuring security of the HGW and/or the household device is the password for use in the authentication of the request for communication services from the user terminal.

When the network server 103 receives the password confirmation packet 1730, it transmits packet 1740 for permission of establishing a connection to the household device or the HGW that transmitted the packet 1730. This establishes and allows data communication thereafter between the network server and the HGW or the household device, and the server 103 notifies that the authentication is made by the password on the request for communication services from the user terminal.

In this exemplary embodiment, the data 1737 in the password confirmation packet 1730 for ensuring security of the HGW and/or the household device is a password. This password defines an authentication data that is identical to or has a certain predetermined relation to the password, which must be contained in any of data packets that requests the network server 103 to provide communication services for directing the HGW or the household device to carry out certain procedure.

Once this password is sent to the network server 103 with the data packet 1730 from the HGW or the household device, every one of data packets, which are transmitted thereafter from the user terminal for requesting the network server 103 to provide communication services of directing the HGW or the household device to carry out certain procedure, is not accepted unless it carries the authentication data that is identical to or has the certain predetermined relation to the password.

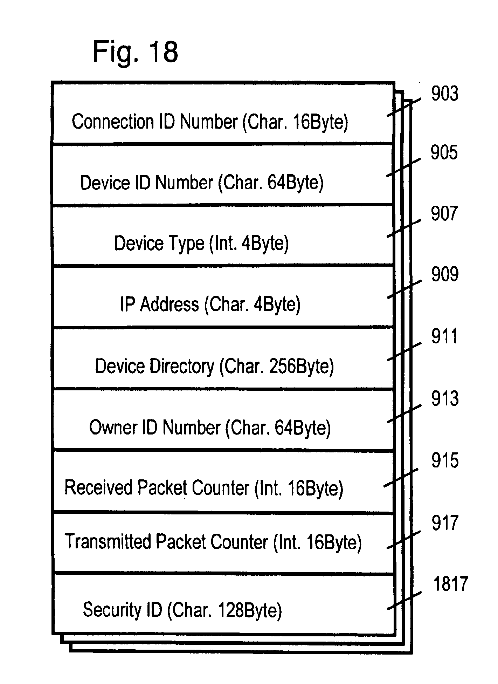

When network server 103 receives the data 1737 for ensuring the security of the HGW and/or the household device along with the data packet 1730 transmitted from the HGW or the household device to network server 103, it stores the password 1737 in the connection data storage table 1801. This connection data storage table 1801 is shown in Fig. 18.

Since the connection data storage table 1801 differs from the previously described connection data storage table 901 only in an aspect in that the former contains the data (password) 1817 for ensuring security of the HGW and/or the household device, description is given hereinafter for only the data (password) 1817 used for ensuring security of the HGW and/or the household device.

The data 1737 involved in the security protection of the HGW and/or the household device is delivered to the network server 103 by the data packet 1730 transmitted from the HGW or the household device to network server 103. The data 1737 is read by the network server 103, and stored as data (password) 1817 for ensuring security of the HGW and/or the household device into the record for storing the data relating to the HGW and the household device.

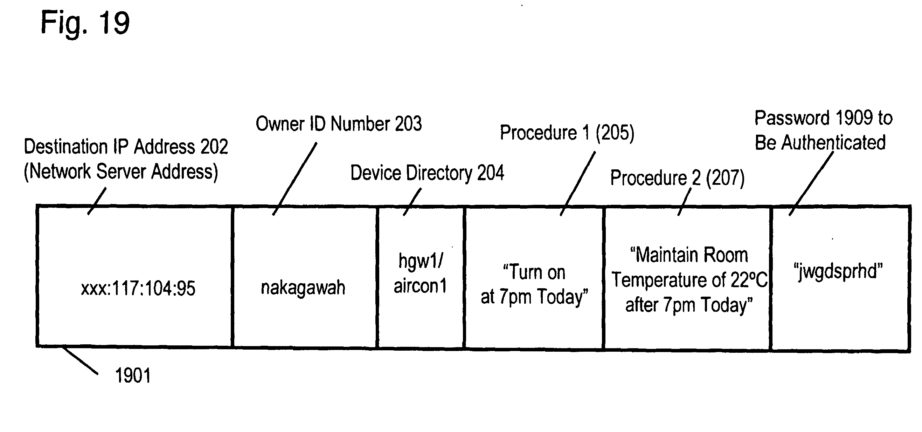

After the data (password) 1817 for ensuring security of the HGW and/or the household device is stored, the user terminal subsequently transmits data packet 1901 for the purpose of requesting the network server 103 to provide communication service of directing the HGW or the household device to carry out a certain procedure by using this password for the authentication. The data packet 1901 is shown in Fig. 19.

This data packet 1901 transmitted from the user terminal to the network server 103 is for requesting the network server 103 to provide a communication service of directing air conditioner 1 installed in the house to perform two procedures, i.e. procedure 1 for "turning its power on at 7:00 pm today" and procedure 2 for "maintaining room temperature to 22°C after 7:00 pm today". Only a difference of this packet 1901 from the previously described data packet 201 of the same purpose is that it contains password 1909 for receiving authentication, and explanation will therefore be made only for the password 1909.

The user terminal stores the password 1909 for authentication in advance, as a password needed for making the selected HGW or the household device perform the selected procedures. The password 1909 defines an authentication data that is identical to or has a certain predetermined relation to the password itself, which must be contained in any of data packets that requests the network server 103 to provide communication services for directing the HGW or the household device to carry out certain procedure. The password 1909 matches with the data 1737 for ensuring the security of the HGW and the household device transmitted with the data packet 1730 from the HGW or the household device to the network server 103 as well as the same data 1817 stored in the connection data storage table 1801.

When the network server 103 receives the data packet 1901 containing the password 1909, it first searches through the connection data storage table 1801 by using device directory 204 included in the data packet 1901 as a search key, and determines a HGW or household device that corresponds to the device directory 204. The server 103 then checks to see if data (password) 1817 for ensuring the security of the HGW and the household device is stored in the record of the connection data storage table 1801 corresponding to the HGW and the household device.

If the data (password) 1817 for ensuring the security of the HGW and the household device is not stored in the record of the connection data storage table 1801 corresponding to destination URL 203, it means that a password and the like has not as yet been established for the security of the HGW and the household device. The data packet 1901 is therefore converted into data packet 701 unconditionally, and transmitted back to the HGW or the household device designated by the device directory 204.

If, , the data (password) 1817 for ensuring the security of the HGW and the household device is stored in the record of the connection data storage table 1801 corresponding to the device directory 204, the password and the like has already been established for the security of the HGW and the household device.

The network server 103 then reads the password 1909 contained in the data packet 1901 for authentication, and verifies it for matching with the data (password) 1817 to ensure security of the HGW and the household device stored in the connection data storage table 1801.

This verification of matching is to determine whether these data are identical, or have a certain predetermined relation with respect to each other.

Only data packet 1901 judged to be acceptable in this matching verification is converted into data packet 701 or data packet 2101, and transmitted to the HGW or the household device designated by the destination URL.

In this exemplary embodiment, device directory 204 is "hgw1/aircon1". When the data packet is transmitted to air conditioner 1 designated by "aircon1" via the home network, with the HGW1 designated by "hgw1" acting as a relaying device, security ID 1817 is applied only to a communication connection identified by connection ID number 903 in the connection storage table 1801.

However, when the device directory 204 is "hgw1/aircon1", and if security ID 1817 is in the record for the "hgw1", this security ID 1817 may be applied to transmission of any data packet directed to every one of the device connected with the HGW1 defined by the "hgw1" through the home network.

By defining the data (password) 1817 for ensuring security of the HGW and the household device, as described above, this embodiment can prevent the air conditioner in the house from being controlled needlessly, mischievously and/or wrongfully.

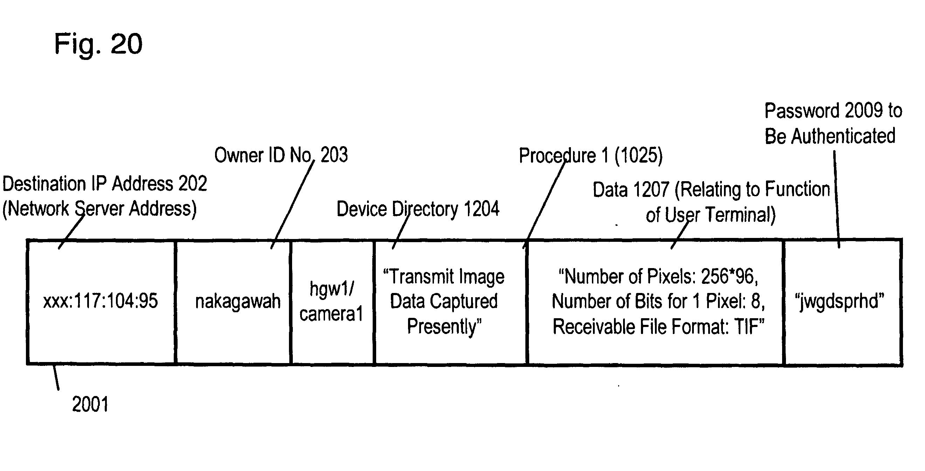

Fig. 20 shows another data packet 2001 transmitted from the user terminal to the network server 103 for the purpose of requesting the network server 103 to provide communication service of directing the HGW or the household device to carry out a certain procedure by using a password for the authentication, after this password is established in the data (password) 1817 of the connection data storage table 1801 for ensuring security of the HGW and/or the household device.

The data packet 2001 transmitted from the user terminal toward the network server 103 requests the network server 103 to provide communication service of directing monitor camera 1 set up in the house to carry out a procedure of "requesting transmission of an image data presently being taken to the user terminal via the HGW".

This packet 2001 differs from the previously described data packet 1201 of the same purpose only in an aspect in that it contains password 2009 for receiving authentication. Since this password 2009 for receiving authentication is analogous to the password 1909 also for authentication, detail of it will be skipped.

A difference here from the already described previous exemplary embodiment is that the monitor camera 1, which is one of the household device, forwards to the network server 103 data (password) 1737 for ensuring security of the HGW and the monitor camera, i.e. the household device, by transmitting data packet 1730 to network server 103 in advance. The network server 103 stores the password 1737 into the connection data storage table 1801. Accordingly, the user terminal is required to transmit to the network server 103 data packet 2001 containing password 2009, which matches with the password 1737 for receiving the authentication to ensure the security, when it makes a request of communication service for directing the monitor camera 1, or the household device, to transmit an image data being taken now.

This can thus prevent the privacy from being violated by someone who needlessly, mischievously or maliciously peeps at image 1 of the monitor camera installed in the house.

Although the data 1737 for ensuring the security is a password in this exemplary embodiment, it may be a cryptographic key for use in encrypting the data transmitted to the HGW and/or the household device. The security of the HGW and/or the household device can be ensured, when the cryptographic key is defined in advance, and the HGW and/or the household device receive only those data that are encrypted with the cryptographic key.

In an instance wherein a HGW is installed in a house, and one or more household device are connected to the HGW through a home network, the HGW may transmit data 1737 (e.g. password or cryptographic key) common to all of the household device connected to the HGW for ensuring their security by representing all the household device. This data for ensuring the security transmitted to the network server 103 by the HGW is valid commonly throughout the household device connected to the HGW. Accordingly, this data 1737 can be used commonly for all of the data packets directed to the network server 103 for requesting it to render communication services of making any of the household device perform a process of operation.

In the case the household device is a refrigerator placed in the house, a prescribed procedure required for the household device to perform may be such that the refrigerator sets and maintains its temperature at a specified degree, or the refrigerator transmits to the user terminal data relative to contents including food items stored in it. Tasks of data conversion and processes required for the network server to perform based on the data transmitted from the household device may be to propose menu of meals based on the contents in the refrigerator, or presents a list of additional materials needed for the menu.

The household device may also be a device, such as a video disk player and a personal computer, a television tuner and recorder, and that is capable of recording television broadcasting programs, set up in the house. A prescribed procedure for this household device to perform is to record a television program broadcasted on a specified channel from a specified time to another specified time, or starting at a specified time and continued for a specified period of time, as in the case of the video player.

The television broadcasting programs need not be limited to those carried by the VHF and UHF waves, but they include television broadcasting programs through satellites, such as broadcasting satellites (BS) and communications satellites (CS), and broadcasting programs through a cable, such as community antenna television (CATV) systems.

Instead of television broadcasting programs, the prescribed procedure can cover recording of only voices in a radio broadcasting program, which does not contain images. Details of these examples will not be described further, since their architectures and functions are generally equal in principle to those of the exemplary embodiment described above.

In the case the household device provided in the house is any of a fire alarm, a gas leakage sensor, an emergency call button, and the like, a prescribed procedure applicable to these household device is to request transmission to the user terminal of a data relating to a current state of the device. Or, in the case when the household device as above comes into a certain situation, such as detection of an abnormality in the house, it is required to transmit to the user terminal of a data relating to the current state of the device as an event-driven type . The user terminal can be a terminal device under control of any person belonging to the house where the household device is installed, or it may be an information-processing device, such as a computer of a security company. It can thus promptly report to outside of the house the abnormal situation occurring in the house, such as a fire, gas leakage, and intrusion into the house of a suspicious person. Detailed description of architecture and functions will also be skipped in this case, since they are analogous to the above. In this instance, a user terminal used from the outside to access to the HGW or the household device installed in the house is a different device than the HGW or the household device in the house. The user terminal sends a request from the outside to the network server for provision of communication services to the HGW or the household device installed in the house. The network server provides communication services between the user terminal and the HGW or the household device installed in the house in response to the request.

The user terminal can also be one of the HGW or the household device installed in the house. The user terminal requests the network server to provide communication services to the same or different HGW or household device installed in the same house or different houses. The network server 103 provides communication services between one of the HGW and the household device installed in a house and another of the HGW and the household device installed in any of houses in response to the request. In this case, two houses that make communication may also be different houses or the same one. And, two HGW's and/or household device that make communication may be different or the same one. Detailed description of architecture and functions will be skipped also in this case, since they are analogous to the foregoing embodiment in which the user terminal makes access to the HGW or the household device installed in the house from the outside.

A terminal in the house may be any device installed in the house, including those not described in the foregoing, and a prescribed procedure to be carried out by the household device includes any procedure that can be executable by these household device. Detailed about architecture and functions will not be described here, since they are essentially analogous to those already described in the foregoing.

In this exemplary embodiment, the user terminal, network server 103, HGW, household device, such as video player 1, air conditioner 1, monitor camera 1, gas meter 1, the refrigerator, electric meter, water meter, and all other devices and device, in the house may achieve their functions by microcomputers equipped therein in combination with programs to control operation of the microcomputers. In addition, the programs used to control operation of the microcomputers may be recorded in recording media readable by the computers.

According to this exemplary embodiment, there is provided communication services for a variety of household device connected with the outside via the widely used general-purpose Internet, to make them perform numerous processes variably and flexibly through the Internet.

Furthermore, the communication services can also be flexibly adaptable to a variety of data processing corresponding to the functions, abilities and the needs of the device on the user side which receives the services.

The invention also makes possible to provide a so-called "synergistic" service in which a third party service provider utilizes a home network already existing in a house of the homeowner covenanter (client) to provide its services. In this case, the third party service provider is able to reduce its investment on device for the communication network, which enables it to provide the services at low prices, thereby realizing the network services profitable for both the third party service provider as well as the homeowner covenanter (client).

### (Second Exemplary Embodiment)

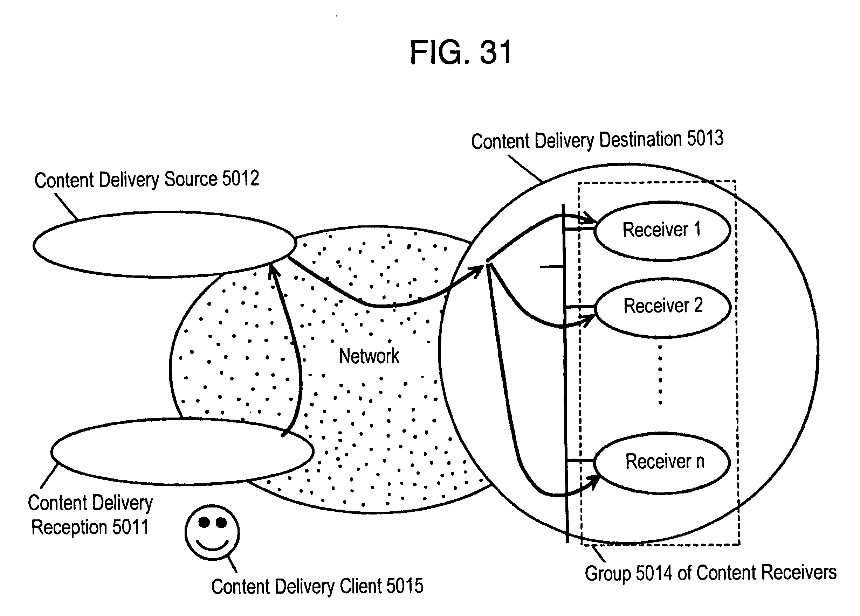

Fig. 31 shows a content delivery system according to the second exemplary embodiment of the present invention. Content delivery reception 5011 accepts a delivery of contents. Content delivery source 5012 originates the delivery of the contents. Content delivery destination 5013 receives the delivery of the contents. A group of content receiver 5014 consists of one or more of content receivers that receives the delivered contents. Content delivery client 5015 sends a request for delivery of the contents.

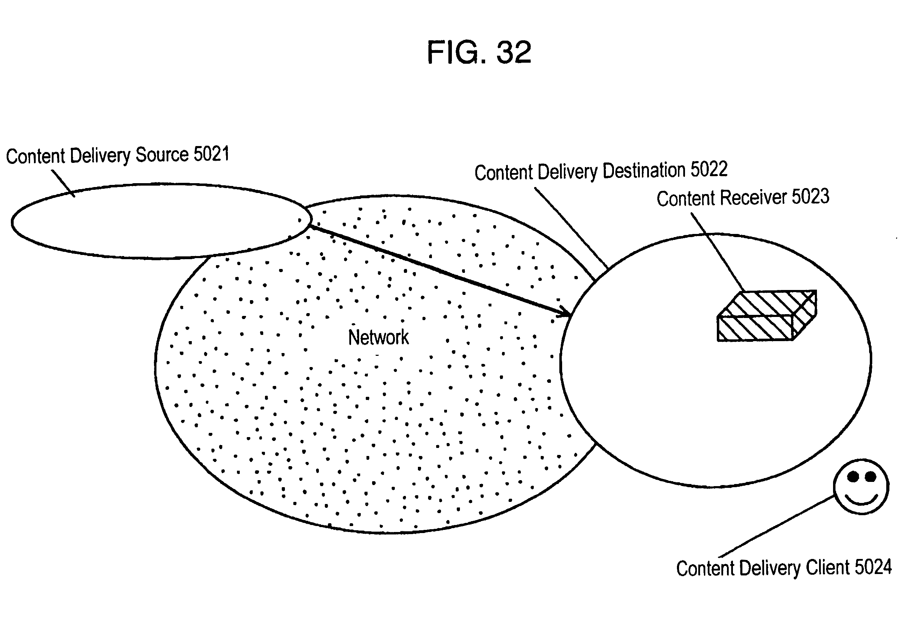

Fig. 32 is a flow chart showing operation of the content delivery system according to the second exemplary embodiment.

### (Step S5031)

The content delivery client 5015 makes advanced registration of information necessary for receiving delivery of contents. The content delivery client 5015 either visit the content delivery reception 5011 in person or uses any other device, such as telephone, FAX, and access through e-mail or homepage, to register with it the following information necessary for the contents delivery:
a) location information that specifies a destination for delivery of contents, i.e., a geographical address or address data to designate the destination on the network;
b) specific information on a group of the content receivers 5014, such as information that the content receivers are personal computers, printers, or network storages, for example, and information specific to the devices, such as manufacture's name, device type, and model number; and
c) authentication information required when requesting delivery of contents and receiving the contents, such as account name and password, and account data to make a payment for the received contents, as a credit card number, for instance.

The advanced registration can be made at any time prior to making a request for delivery of contents. It can be made even at a time of making the first request for contents.

### (Step S5032)

The content delivery client makes a request for delivery of contents. The client requests the content delivery reception 5011 for delivery of contents that he/she desires using the same way as that in the step S5031. At the same time he/she specifies a content delivery destination and a content receiver where the contents are to be addressed, if he/ she has registered more than one delivery destination and/or a plurality of receivers in the advanced registration. He/she also specifies an output format, if the content receiver is such a device as printer, whose output format is selectable for a size of paper, between monochrome and color, one side printing or both sides, and the like, for example. Naturally, there are default values in all specifications, and the default values are used if nothing is specified.

### (Step S5033)

The content delivery reception 5011 confirms the contents specified by the content delivery client 5015, passes information necessary for delivery of the contents to the content delivery source 5012, and requests it to proceed with delivery of the contents.

### (Step S5034)

The content delivery source 5012 forwards the contents in its possession to the content delivery destination that made the request, in the form requested.

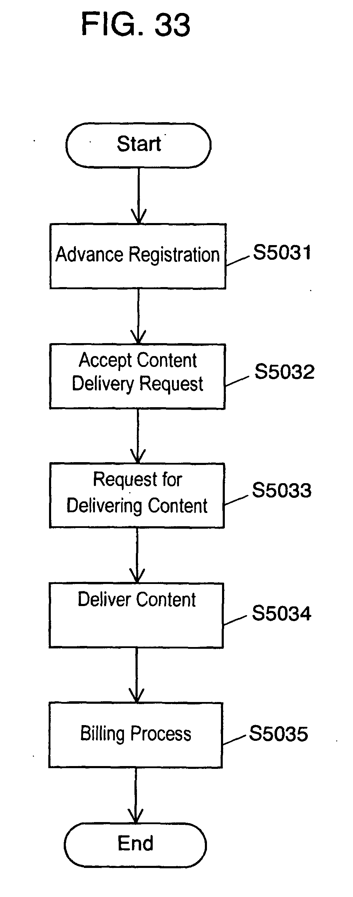

Referring now to Fig. 33, one example of delivery is described hereinafter. The content delivery source 5401 has content storage unit 5402 for storing contents, content delivery unit 5403 for sending the contents over to the delivery destination, delivering program transmitter 5404 for sending delivering program necessary for delivery of the content and delivery information processor 5405 for processing the delivery information forwarded from the content delivery reception and controlling the entire process involved in the delivery. Network 5410 links the content delivery source 5401 and the content delivery destination 5411. The content delivery destination 5411 receives delivery of the contents. The content delivery destination 5411 is provided with content reception controller 5412 for controlling reception of the contents, authentication section 5413 for verifying authentication and so on of the contents, routing controller 5414 for passing on the received contents to an appropriate content receiver, program execution section 5415 for executing the content delivering program received therein, program memory 5416 for storing the content delivering program received therein, and content receivers 5417 to 5419. There can be any number of the content receivers.

Based on the information received from the content delivery reception 5011, the delivery information processor 5405 first gets hold of the contents to be delivered, delivery destination of the contents, content receiver, and specifications of the content receiver given by the content delivery client 5015. Next, the delivery information processor 5405 retrieves the contents to be delivered from the content storage unit 5402, and passes them on to the content delivery unit 5403. At the same time, it compares format of the stored contents with type of the content receiver specified by the content delivery client 5015 and the specifications required for the content receiver, and determines processes necessary to perform in order to deliver the contents according to the specifications requested for the content receiver. In this exemplary embodiment, following explanation is given on the assumption that content receiver 5418 was designated as destination. If, for instance, the contents are stored in a file format, the content receiver 5418 is a printer, and the content delivery client 5015 specified double-face printing, it is then necessary to convert contents of the file into such a data format that can be interpreted by the printer, and to give an instruction for double-face printing in the control language readable by the printer.

The delivery information processor 5405 converts the contents, which was once passed on to the content delivery unit 5403, into the format acceptable for the content receiver 5418, and passes it again to the content delivery unit 5403.

The delivery information processor 5405 prepares content delivering program, which is operable at the content delivery destination 5411 to control the content receiver 5418, and passes it on to the delivering program transmitter 5404. The delivering program transmitter 5404 passes the delivering program on to the content delivery destination 5411 via the network 5410.

Data communication takes place at this time from the content delivery source 5401 to the content delivery destination 5411. There may be cases in the data communication that other party cannot be located if the content delivery destination 5411 is a general consumer whose address is not fixed . However, tunneling techniques, such as the Virtual Private Network ("VPN"), have made possible a method in that the content delivery destination sends data to the content delivery source instead of a method that the content delivery destination makes access to the content delivery source to get the data. The present exemplary embodiment is illustrated on the premise that the data communication can be initiated from the content delivery source to the content delivery destination by using such techniques as the VPN. The method of communication is not specifically restricted in this respect.

The content receive controller 5412 in the content delivery destination 5411 passes on the delivering program transmitted thereto to the authentication section 5413 where authentication is made. The authentication may be made as to whether the content delivery source is legitimate, whether the content delivery destination is legitimate, and whether the contents are legitimate. Further detail of the authentication is not referred to in this exemplary embodiment.

Upon completion of the authentication by the authentication section 5413, the content receive controller 5412 passes the delivering program on to the program storage unit 5416, and the program storage unit 5416 stores the delivering program. Subsequently, the content receive controller 5412 directs the program execution section 5415 to execute the delivering program. Thus the program execution section 5415 executes the delivering program. The delivering program is set for one of the content receiver specified by the content delivery client 5015, i.e. the content receiver 5418 in this exemplary embodiment, according to the specifications set by the request of the content receiver 5015. In the case of a printer, for instance, the setting is made for a paper size, orientation of the paper, double-face printing, and the like. After completion of the setting of the content receiver 5418, and preparation made for accepting the contents, the content delivering program issue a command to the content delivery source 5401 via the network 5410 for delivery of the contents.

The content delivery information processor 5405 of the content delivery source 5401 requests the content delivery unit 5403 to deliver the contents responsive to the demand of the content delivering program. The content delivery unit 5403 delivers the contents to the content delivery destination 5411 through the network 5410.

When the content receive controller 5412 of the content delivery destination 5411 confirms delivery of the contents, it communicates with the content delivering program to this effect. The content delivering program in conjunction with the routing controller 5414, passes the delivered contents on to the content receiver 5418. The content receiver 5418 receives the given contents with the way specified by the content delivery client.

While the contents are being received, the content receive controller 5412 monitors the process of receiving the contents, and checks whether erroneous information is detected or not in the content receiver 5418 or the content delivering program.

When all the contents are delivered, the content delivery source 5401 communicates the completion of delivery to the content delivery destination 5411. The content receive controller 5412 in the content delivery destination 5411 communicates with the content delivery source 5401 for a receipt of the contents, after confirming that it has received the contents normally.

What has been described above is one example of the delivery. Upon completion of the contents delivery in the step S5034, the content delivery source 5012 communicates to the content delivery reception 5011 to report the completion of delivery.

### (Step S5035)

The content delivery reception 5011 collects fees from the content delivery client 5015 using information on the content delivery client 5015, which was registered in advance in the step S5031, and pays the content delivery source 5012 the costs incurred for the contents and contents delivery.

As described above, provided in this exemplary embodiment is the content delivery system, which includes the content delivery reception for accepting a request of contents delivery, the content delivery source for delivering the contents, the content delivery destination for receiving delivery of the contents, and one or more content receivers in the content delivery destination, wherein the content delivery reception, the content delivery source and the content delivery destination are in communication through the network, the content delivery source sends to the content delivery destination the content delivering program designed to carry out contents delivery in response to the request of the content delivery client, and the content delivering program delivers contents from the content delivery source to one of the content receivers specified by the content delivery client, and thereby the content delivery client is able to request delivery of the contents from a location different from the content delivery destination, and to specify the receiving way of the contents.

### (Third Exemplary Embodiment)

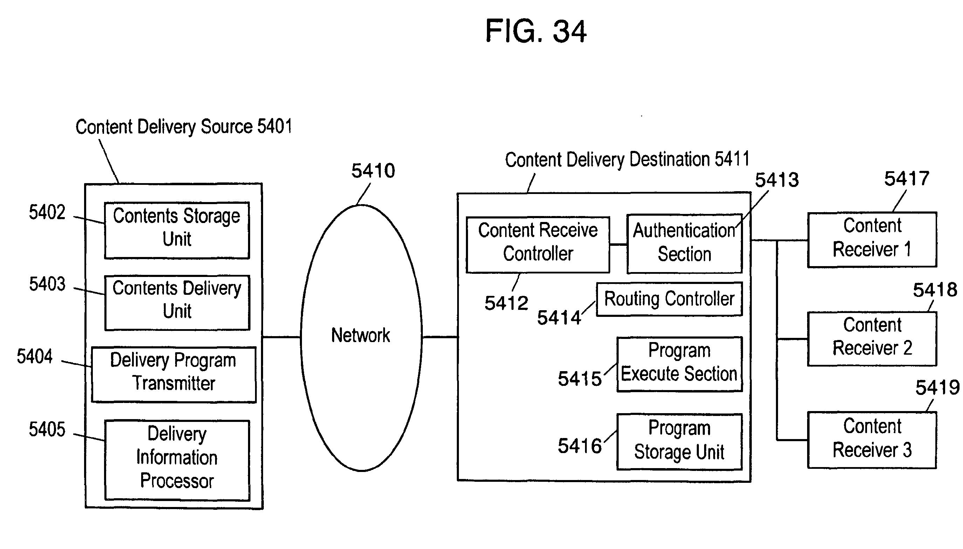

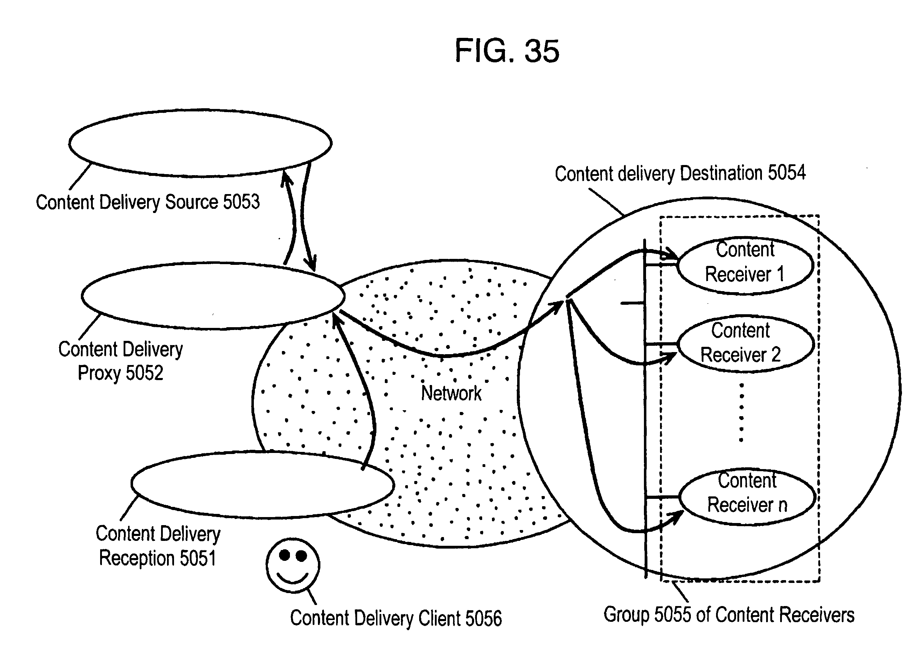

Fig. 34 shows a content delivery system according to the third exemplary embodiment of the present invention. Content delivery source 5053 has contents. A group of content receiver 5055 consists of one or more content receiver that receives the delivered contents. The content delivery system operates in a manner which will be described hereinafter with reference to a flowchart in Fig. 35.

### (Step S5061)

Content delivery client 5056 makes advanced registration of information necessary for receiving delivery of contents. The content delivery client 5056 either visit content delivery reception 5051 in person or uses any other means, such as telephone, FAX, and access through e-mail or homepage, to register with it the following information necessary for the contents delivery:
a) location information that specifies a destination for delivery of contents, i.e., a geographical address or address data to designate the destination on the network;
b) specific information on the group of content receiver 5055, such as information that the content receivers are personal computers, printers, or network storages, for example, and information specifying the devices, such as manufacture's name, device type, and model number; and
c) authentication information required when requesting delivery of contents and receiving the contents, such as account name, password, and account data to make a payment for the received contents, as a credit card number and the like, for instance.

The advanced registration can be made at any time prior to making a request for delivery of contents. It can be made even at a time of making the first request for contents.

### (Step S5062)

The content delivery client makes a request for delivery of contents. The client requests the content delivery reception 5051 for delivery of contents that he/she desires using the same means as the step S5061. At the same time he/she specifies a content delivery destination and a content receiver where the contents are to be addressed, if he/ she has registered more than one delivery destination and/or a plurality of receivers in the advanced registration. He/she also specifies an output format, if the content receiver is such a device as printer, whose output format is selectable for a size of paper, between monochrome and color, one-side printing or both sides, and the like, for example. Naturally, there are default values in all specifications, and the default values are used if nothing is specified.

When the content delivery reception 5051 accepted the request for delivery of the contents, it checks for a location of the contents with content delivery proxy 5052. If there are a plurality of content delivery sources, such as other companies also having contents, the content delivery proxy 5052 checks to determine which content delivery source carries the contents and whether it can request the content delivery source in question for the contents. If the contents are not available, the content delivery proxy 5052 reports this fact to the content delivery reception 5051. When the content delivery proxy 5052 finds any content delivery source 5053 that carries the contents, it confirms a method of obtaining the contents. Although there are a number of methods available for transaction of contents between the content delivery proxy 5052 and content delivery source 5053, this exemplary embodiment illustrates the following two methods.

### (Method 1)

The content delivery proxy 5052 and the content delivery source 5053 have mutual understanding in advance for cost, method of payment, and procedure in obtaining the contents.

### (Method 2)

The content delivery client 5056 makes an agreement of use with the content delivery source 5053 in advance, and obtains authentication information on user name, a password, and the like necessary when using contents. When the content delivery client 5056 makes a request for delivery of contents, he/she gives the authentication information for use of the content delivery source 5053, per a request of the content delivery reception 5051. The content delivery reception 5051 passes on the authentication information to the content delivery proxy 5052. The content delivery proxy 5052 gets access to the content delivery source 5053 using this authentication information, and obtains the contents requested by the content delivery client 5056.

Whenever the content delivery proxy 5052 is required to obtain the contents from the content delivery source 5053 using the method 2, it informs the content delivery reception 5051 to this effect in requesting acquisition of the authentication information. The content delivery reception 5051 requests the content delivery client 5056, the authentication information necessary to obtain the contents, and gets them.

### (Step S5063)

The content delivery reception 5051 confirms the contents specified by the content delivery client 5056, passes information necessary for delivery of the contents to the content delivery proxy 5052, and requests it to proceed with delivery of the contents.

### (Step S5064)

The content delivery proxy 5052 sends a request for the contents specified by the content delivery client 5056 to the content delivery source 5053, with which it has confirmed of having the contents, in the step S5062.

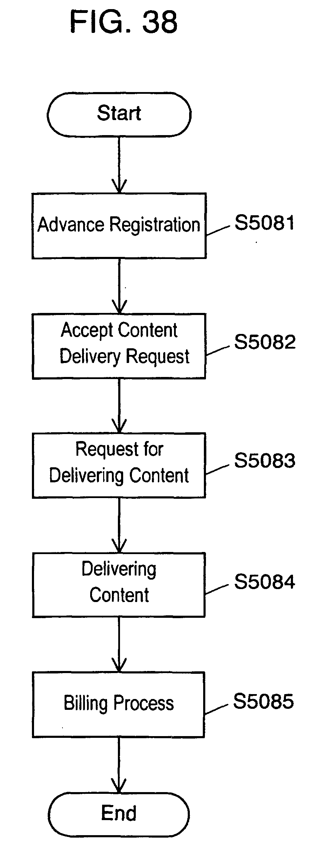

Referring now to Fig. 38, described hereinafter are details of the method 1 and method 2. Fig. 38 illustrates a specific architecture of the content delivery proxy 5052 and the content delivery source 5053 shown in Fig. 34. The content delivery source 5053 includes authentication information verification section 5902 for confirming the client who makes a request for contents, and content storage unit 5903 storing the contents. The content delivery proxy 5052 includes authentication information memory 5912 for storing authentication information to be used when making a request for contents, authentication information transmitter 5913 for sending authentication information to the content delivery source, content storage unit 5914 for storing obtained content, delivering program transmitter 5915 for use in delivering contents, and delivery information processor 5916 for controlling a series of delivering tasks. Network 5920 connects between the content delivery proxy and the content delivery source.

Each of the methods functions in a manner as described hereinafter.

### (Method 1)

First, the content delivery source 5053 and the content delivery proxy 5052 determine authentication information needed for transaction of the contents, and it is stored beforehand in the authentication information memory 5912. This represents a process in which the content delivery proxy makes agreement with a content delivery source, which has contents, about delivery of its contents, establishes therebetween authentication information for use in having access to the content delivery source, and retains the related information, when it starts the business of contents delivery. If the content delivery proxy makes agreement with a plurality of content delivery sources, it stores more than one set of authentication information in the authentication information memory 5912.

The content delivery proxy 5052 delivers contents when it receives a request of contents delivery from the content delivery reception 5051. First, the content delivery proxy 5052 gives a request for the contents to content delivery source 5053, for which it has confirmed of having the contents in the step S5062. If the content delivery source 5053 requires the content delivery proxy 5052 to follow the procedure in method 1, the content delivery proxy 5052 selects authentication information necessary for the request to the content delivery source 5053 among those stored in the authentication information memory 5912, and uses the authentication information transmitter 5913 to send it to the content delivery source 5053 via the network 5920.

The content delivery source 5053 verifies the authentication information transmitted thereto with the authentication information verification section 5902, and transmits the contents requested by the content delivery proxy 5052 from the content storage unit 5903 to the content delivery proxy 5052 via the network 5920, if it verified that the requested party is legitimate.

The content delivery proxy 5052 stores the contents forwarded thereto into the content storage unit 5914, and delivers them thereafter to the content delivery destination that made the request through the content delivery reception 5051.

Since delivery of the contents to the content delivery destination is made in the same manner as that described in the second exemplary embodiment, details of it is skipped here.

### (Method 2)

The content delivery proxy 5052 delivers contents when it receives a request of contents delivery from the content delivery reception 5051. First, the content delivery proxy 5052 gives a request for the contents to content delivery source 5053, for which it has confirmed of having the contents in the step S5062. If the content delivery source 5053 requires the content delivery proxy 5052 to follow the procedure in method 2, the content delivery reception 5051 is assumed to have passed the content delivery source 5053 with the authentication information needed in the process of making a request of contents delivery. Therefore, the authentication information is stored in the authentication information memory 5912, and it is forwarded to the content delivery source 5053 by the authentication information transmitter 5913 via the network 5920.

The content delivery source 5053 verifies the authentication information sent thereto with the authentication information verification section 5902, and transmits the contents requested by the content delivery proxy 5052 from the content storage unit 5903 to the content delivery proxy 5052 via the network 5920, if it verified that the requested party is legitimate.

The content delivery proxy 5052 stores the contents forwarded thereto into the content storage unit 5914, and delivers them thereafter to the content delivery destination that made the request through the content delivery reception 5051.

Since delivery of the contents to the content delivery destination is made in the same manner as that described in the second exemplary embodiment, details of it is skipped here.

### (Step S5065)

The content delivery proxy 5052 delivers, in a format requested by the destination , the contents obtained from the content delivery source 5053 to the content delivery destination that requested them. The content delivery proxy 5052 notifies the content delivery reception 5051 to the effect that delivery of the contents has completed, when the delivery was made normally.

### (Step S5066)

The content delivery reception 5051 collects a fee from the content delivery client 5056 using information on the content delivery client 5056, which was registered in advance in the step S5061, and pays the content delivery proxy 5052 the required cost. At the same time, the content delivery reception 5051 also collects a contents fee from content delivery client 5056, and pays it to the content delivery proxy 5052 as a cost incurred in obtaining the contents, if the content delivery proxy 5052 obtained the contents from the content delivery source 5053 with the method 1. The content delivery proxy 5052 pays the contents fee to the content delivery source 5053 in a certain way previously arranged with the content delivery source 5053. If the content delivery proxy 5052 obtains the contents from content delivery source 5053 with the method 2, it does not collect the contents fee because the content delivery client 5056 pays it directly.

In this exemplary embodiment, as described above, the content delivery reception, the content delivery proxy, the content delivery source and the content delivery destination are in communication with respect to one another through the network, and the content delivery proxy obtains and delivers the contents according to the request of the content delivery client. The content delivery proxy sends to the content delivery destination a content delivering program designed to carry out delivery, and the content delivering program delivers the contents from the content delivery proxy to one of the content receiver specified by the content delivery client. Accordingly, the content delivery client is able to request delivery of the contents and to specify the way it receives the contents from a location different from the content delivery destination. In addition, the content delivery proxy can also deliver any content in possession of the ordinary content delivery source by instead of the source.

### (Fourth Exemplary Embodiment)

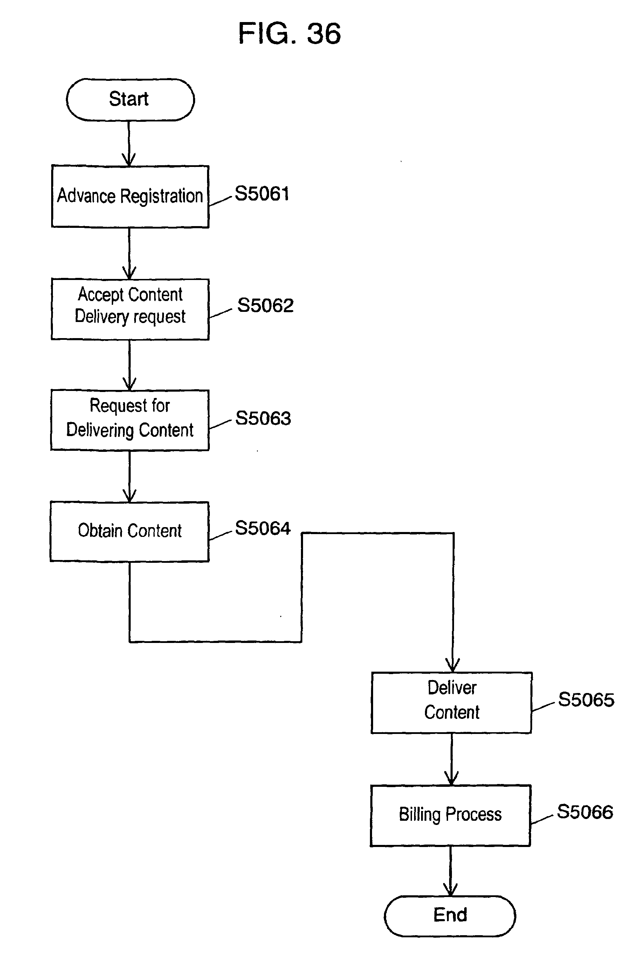

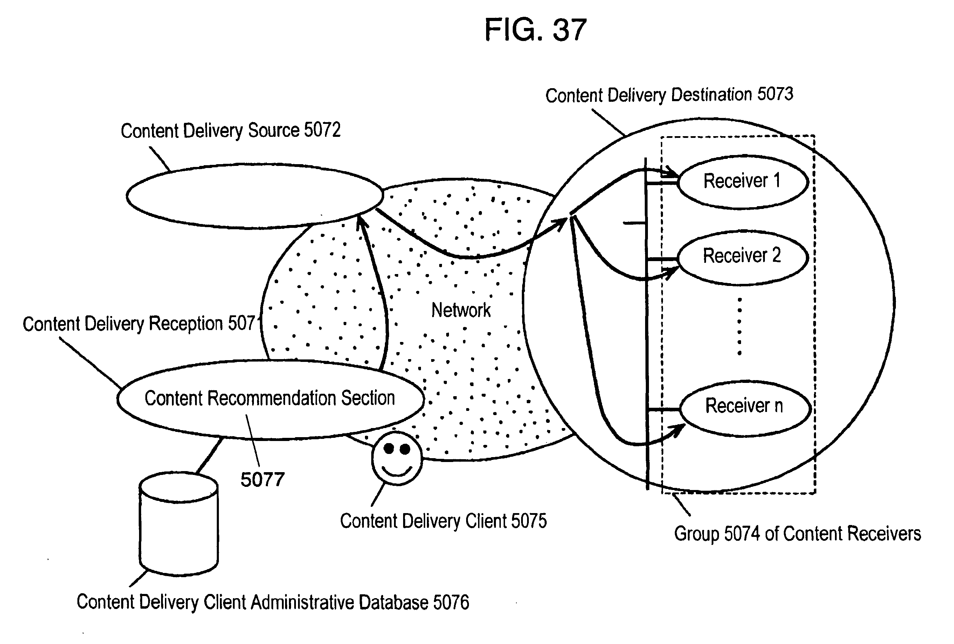

Fig. 36 shows a content delivery system according to a third exemplary embodiment of the present invention. A group of content receivers 5074 consists of one or more of content receiver that receives the delivered contents. Content delivery client administrative database 5076 administrates information of content delivery clients at a content delivery reception. Content recommendation section 5077 manages information of content delivery client 5075 at the content delivery reception 5071, recommends a content and receivers that suit a taste of the content delivery client 5075 as determined based on a record of past usages by the content delivery client 5075, in response to his/her request of content delivery, and stores information as to whether the content delivery client 5075 accepted the recommendation, into the content delivery client administrative database 5076. The above content delivery system operates in a manner, which will be described now with reference to a flowchart in Fig. 37.

### (Step S5081)

First, the content delivery client 5075 makes advanced registration of information necessary for receiving delivery of contents. The content delivery client 5075 either visit the content delivery reception 5071 in person or uses any other means, such as telephone, FAX, and access through e-mail or homepage, to register with it the following information necessary for the contents delivery:
a) location information that specifies a destination for delivery of contents, i.e., a geographical address or address data to designate the destination on the network;
b) specific information on a group of the content receivers 5074, such as information that the content receivers are personal computers, printers, or network storages, for example, and information specifying the devices, such as manufacture's name, device type, and model number; and
c) authentication information required when requesting delivery of contents and receiving the contents, such as account name, password, and account data to make a payment for the received contents, as a credit card number, for instance.

The advanced registration can be made at any time prior to making a request for delivery of contents. It can be made even at a time of making the first request for delivery of contents.

The content delivery reception 5071 stores the above information relating to the content delivery client 5075 in the content delivery client administrative database 5077.

### (Step S5082)

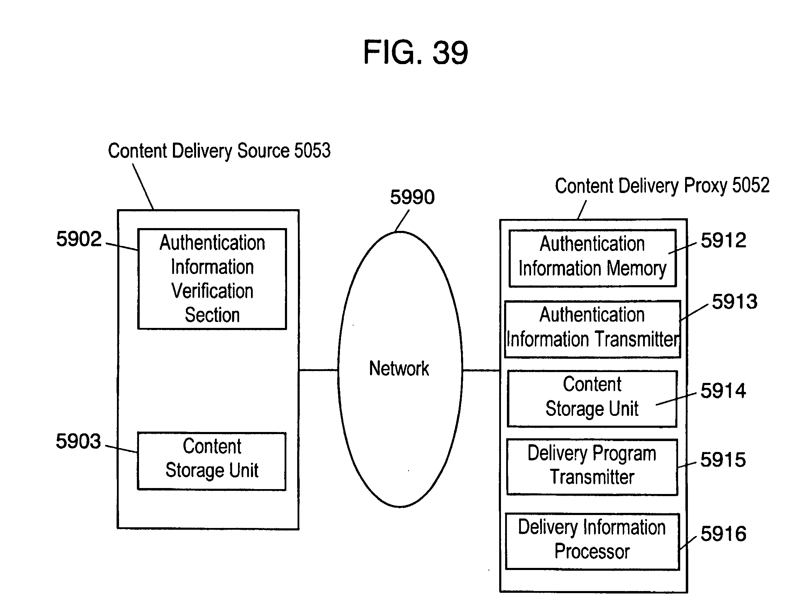

The content delivery client 5075 requests delivery of contents. He/she requests the content delivery reception 5071 for delivery of the contents that he/she desires using the same way as the step S5081. When the content delivery client 5075 requests the content delivery reception 5071 at this time for recommendation of contents, the content delivery reception 5071 communicates the request to the content recommendation section 5077. The content recommendation section 5077 gives its recommendation of contents and receiver determined based on information on the content delivery client 5075 stored in the content delivery client administrative database 5076 and contents information of the content delivery source 5072. Details of this process are described with reference to Fig. 39.

Fig. 39 shows a delivery reception portion of the content delivery system according to the third exemplary embodiment. The portion includes content delivery reception 5071, content delivery client administrative database 5076 for storing information on the content delivery client 5075, content recommendation section 5077 for recommending contents and content receiver to the content delivery client 5075, and reference numeral 5072 representing a content delivery source having content storage unit 5101 for storing contents and content retriever 5102 for retrieving the stored contents.

Initially, the content delivery client administrative database 5076 stores only the information given by the content delivery client 5075 in the step S5081. The content delivery client administrative database 5076 accumulates information on the content delivery client 5075 by getting additional information whenever the content delivery client 5075 makes request for content delivery, as to what content and which content receiver the content delivery reception 5071 made the request of delivery.

First, when the content delivery client 5075 requests the content delivery reception 5071 a recommendation of content in an intent of requesting delivery of the content, the content delivery reception 5071 directs the content recommendation section 5077 to recommend a content.

The content recommendation section 5077 first gets an input of data on the content delivery client 5075 from the content delivery client administrative database 5076.

The content recommendation section 5077 extracts data on the past use of contents as well as information on the choice of contents registered during the advanced registration from the input data, and passes them on to the contents retriever 5102 in the content delivery source 5072 via the network 5110.

Using the data given to it, the contents retriever 5102 generates a keyword for searching in the content storage unit, and it begins to search through the content storage unit 5101. Then, the content storage unit 5101 passes on information of contents obtained from the search to the content recommendation section 5077 via the network 5110. Although there are various methods of generating the keyword and means for retrieving contents, their specific examples will not be referred to in this exemplary embodiment.

The content recommendation section 5077 presents to the content delivery client 5075 its recommendation of a content and receiver, as determined based on the obtained information of contents, the information on the content receiver owned by the content delivery client 5075 and data on the past use of content receivers, which are contained in the information on the content delivery client 5075 retrieved from the content delivery client administrative database 5076.

The content delivery client 5075 indicates to the content recommendation section 5077 as to whether he/she intends to accept the recommended content and receiver.

If the content delivery client 5075 accepts the recommendation, the content recommendation section 5077 passes on the accepted information on the content and the content receiver to the content delivery reception 5071. The content delivery reception 5071 interprets it as a request from the content delivery client 5075 for delivery of the content.

In an event that the content delivery client 5075 does not accept the recommendation, the content recommendation section 5077 takes it as information on refusal of the recommendation, and records the information on content and content receiver into the content delivery client administrative database 5076. It also reports to the content delivery reception 5071 of the fact that the recommendation has not been accepted. The content delivery reception 5071 returns to the normal state, waiting for a request of content delivery after it receives this report.

If the content delivery client 5075 does not accept the recommendation of the content recommendation section 5077, he/she makes a request for delivery of content in the ordinary manner, i.e. he/she specifies a content of his/her choice along with receiver. At the same time the content delivery client 5075 specifies a content delivery destination and a content receiver where the content is to be directed, if he/ she has registered more than one delivery destination and/or a plurality of receivers in the advanced registration. He/she also specifies an output format, if the content receiver is a device, such as a printer, whose output format is selectable for a size of paper, between monochrome and color, one-side printing or both sides, and the like, for instance. Naturally, there are default values in all specifications, and the default values are used if nothing is specified.

### (Step S5083)

The content delivery reception 5071 confirms the content specified by the content delivery client 5075, stores the information on the content and the receiver into the content delivery client administrative database 5076, and passes on the same information to the content delivery source 5072 to requests delivery of the content.

### (Step S5084)

The content delivery source 5072 forwards the content in its possession to the content delivery destination that made the request, in the requested format. The content delivery destination 5073 monitors delivery of the content, and requests the content delivery source 5072 for redelivery of the content if any failure takes place. Even if another failure occurs in the subsequent redelivery due to a trouble with the content delivery destination 5073, it reports the failure of delivery to the content delivery source 5072. When the content is delivered successfully, it reports the content delivery source 5072 to that effect. Upon receipt of the report from the content delivery destination 5073, the content delivery source 5072 passes on the information to the content delivery reception 5071. Since the content is delivered to the content delivery destination in the same manner as described in the second exemplary embodiment, details of it will be skipped here.

### (Step S5085)

The content delivery reception 5071 closely examines a content of the report from the content delivery source 5072. If delivery ended successfully, the content delivery reception 5071 collects fees from the content delivery client 5075 using information on the content delivery client 5075, which was registered in advance in the step S5081, and pays the content delivery source 5072 the costs incurred for the content and content delivery. If the delivery was not successful, the content delivery reception 5071 reports the fact to the content delivery client 5075. Finally, the content delivery reception 5071 stores information about a result of the content delivery in the content delivery client administrative database 5076, and uses it in determining a recommendation for the next request of content delivery.

As described above, the content delivery system of this exemplary embodiment includes the content delivery reception for accepting the request of content delivery, the content delivery source for delivering the content, and the content delivery destination that receives delivery of the content. The content delivery destination includes a plurality of the content receivers, and the content delivery reception includes the content recommendation section and the content delivery client administrative database. The content delivery reception, the content delivery source, and the content delivery destination are all connected through the network. The content delivery reception accumulates a history of usage of the content delivery client in the content delivery client administrative database, and the content recommendation section recommends contents based on the accumulated data. Accordingly, the content delivery client can easily select contents that fit to his/her choice. In addition, the content delivering program for delivering contents according to a request of the content delivery client is forwarded from the content delivery source to the content delivery destination, and this content delivering program delivers the contents from the content delivery source to one of the content receiver specified by the content delivery client. As a result, the content delivery client can request delivery of contents from any location different from the actual content delivery destination. In addition, the content delivery client can specify how it receives the contents.

### INDUSTRIAL APPLICABILITY

According to the present invention, communication services are provided for a variety of household device connected with the outside via the widely used general-purpose Internet, to make them perform numerous processes variably and flexibly through the Internet.

Furthermore, the communication services can also be flexibly adaptable for a variety of data processing corresponding to the functions, abilities and the needs of the device on the user side that receives the services.

The invention also makes possible to provide a synergistic service in which a third party service provider utilizes a home network in a house of the covenanter (client) to provide its services. In this case, the third party service provider is able to reduce its investment on device for the communication network, which enables it to provide the services at low prices, thereby realizing the network services profitable for both the third party service provider as well as the covenanter (client).

## Claims

1. A method of providing communication services, comprising the steps of:
allowing a first data processor to determine a first procedure to be executed by a second data processor based on data received from a third data processor via a first network; and
allowing the first data processor to transmit, to the second data processor via the first network, first data for making the second data processor execute the determined first procedure.

2. The method as recited in claim 1,
wherein the first data processor stores a plurality of procedures to be executed by the second data processor, and
wherein said step of allowing the first data processor to determine the first procedure includes the step of allowing the first data processor to select the first procedure among the plurality of procedures based on the data received from the third data processor.

3. The method as recited in claim 1 or 2,
wherein the determined first procedure includes a second procedure to be executed by a fourth data processor, and
wherein the first data includes second data for making the fourth data processor execute the second procedure,
said method further comprising the step of:
allowing the second data processor to transmit the second data to the fourth data processor via a second network.

4. The method as recited in claim 3, wherein the second procedure includes a procedure for requesting transmission of third data stored in one of the second data processor and the fourth data processor to one of the third data processor and the first data processor.

5. The method as recited in claim 4, further comprising the steps of:
allowing the first data processor to receive the third data; and
allowing the first data processor to convert and process the received third data according to a predetermined procedure.

6. The method as recited in claim 5,
wherein the data received by the first data processor from the third data processor includes data relating to a function of the third data processor,
wherein the third data is independent of the function of the third data processor, and
wherein said step of allowing the first data processor to convert and process the received third data includes the step of making the third data adaptable for the function of the third data processor.

7. The method as recited in any one of claims 3 to 6, wherein the second data includes at least one of data used by the fourth data processor to execute the second procedure and a program for executing the second procedure.

8. The method as recited in claim 7,
wherein the at least one of the data and the program is variable according to the second procedure,
said method further comprising the step of:
allowing the first data processor to transmit the at least one of the data and the program to the fourth data processor after said step of allowing the first data processor to determine the first procedure based on the received data.

9. The method as recited in any one of claims 3 to 8, further comprising the step of:
providing services performed with using the third data processor by communication between the first data processor and the second data processor, and by data communication between the second data processor and the fourth data processor via the second network.

10. The method as recited in claim 1 or 2, wherein the first procedure includes a procedure of directing transmission of fourth data stored in the second data processor from the second data processor to one of the third data processor and the first data processor.

11. The method as recited in claim 10 further comprising the steps of:
allowing the first data processor to receive the fourth data; and
allowing the first data processor to convert and process the received fourth data according to a predetermined procedure.

12. The method as recited in claim 11,
wherein the data received by the first data processor from the third data processor includes data relating to a function of the third data processor,
wherein the fourth data is independent of the function of the third data processor, and
wherein said step of allowing the first data processor to convert and process the received first data includes the step of making the fourth data adaptable for the function of the third data processor.

13. The method as recited in claim 1 or 2, wherein the second data includes at least one of data used by the second data processor to execute the first procedure and a program for executing the first procedure.

14. The method as recited in claim 13,
wherein the at least one of the data and the program is variable according to the second procedure,
said method further comprising the step of:
allowing the first data processor to transmit the at least one of the data and the program to the second data processor after said step of allowing the first data processor to determine the first procedure based on the received data.

15. The method as recited in any one of claims 1 to 14, further comprising the steps of:
counting a number of data packets passing through the first data processor; and
using the counted number for traffic control and billing.

16. The method as recited in any one of claims 1 to 15, wherein the second data processor and the third data processor are the same equipment.

17. A program for making a computer execute said method as recited in any one of claims 1 to 16.

18. A recording medium storing said program as recited in claim 17, said recording medium being readable by the computer.

19. A system for providing a communication service, comprising:
a first data processor;
a second data processor connected to said first data processor via a first network; and
a third processor connected to said first and second data processors via said first network,
wherein said first data processor determines a first procedure to be executed by said second data processor based on data received from a third data processor via said first network, and
wherein said first data processor transmits, to said second data processor via said first network, first data for making said second data processor execute said determined first procedure.

20. The system as recited in claim 19,
wherein said first data processor stores a plurality of procedures to be executed by said second data processor, and
wherein said first data processor selects said first procedure among said plurality of procedures based on said data received from said third data processor.

21. The system as recited in claim 19 or 20, further comprising:
a fourth data processor connected to said second data processor via a second network,
wherein said first procedure includes a second procedure to be executed by said fourth data processor,
wherein said first data includes second data for making said fourth data processor execute said second procedure, and
wherein said second data processor transmits said second data to said fourth data processor via said second network.

22. The system as recited in claim 21, wherein said second procedure includes a procedure of directing transmission of third data stored in said fourth data processor to one of said third data processor and said first data processor.

23. The system as recited in claim 22, wherein said first data processor receives said third data, and converts and processes said third data according to a predetermined procedure.

24. The system as recited in claim 23,
wherein said data received by said first data processor from said third data processor includes data relating to a function of said third data processor,
wherein said third data is independent of said function of said third data processor, and
said first data processor makes said third data adaptable for said function of said third data processor according to said predetermined procedure.

25. The system as recited in any one of claims 21 to 24, wherein said second data includes at least one of data used by said fourth data processor to execute said second procedure and a program for executing said second procedure.

26. The system as recited in claim 25,
wherein said at least one of said data and said program is variable according to said second procedure, and
wherein said first data processor transmits said at least one of said data and said program to said fourth data processor after determining said first procedure.

27. The system as recited in any one of claims 21 to 26, wherein a service performed with using said third data processor is provided by communication between said first data processor and said second data processor, and by data communication between said second data processor and said fourth data processor via said second network.

28. The system as recited in claim 19 or 20, wherein said first procedure includes a process of directing transmission of fourth data stored in said second data processor to one of said third data processor and said first data processor.

29. The system as recited in claim 28, wherein said first data processor receives said fourth data, and converts and processes said fourth data according to a predetermined procedure.

30. The system as recited in claim 29,
wherein said data received by said first data processor from said third data processor includes data relating to a function of said third data processor,
wherein said fourth data is independent of said function of said third data processor, and
wherein said first data processor makes said fourth data adaptable for said function of said third data processor according to said predetermined procedure.

31. The system as recited in claim 19 or 20, wherein said first data includes at least one of data used by said second data processor to execute said first procedure and a program for executing said first procedure.

32. The system as recited in claim 31,
wherein said at least one of said data and said program is variable according to said first process, and
wherein said first data processor transmits said at least one of said data and said program to said second data processor after determining said first process.

33. The system as recited in any one of claims 19 to 32, wherein a service performed by using said third data processor is provided by communication between said first data processor and said second data processor.

34. The system as recited in any one of claims 19 to 33, wherein said second data processor and said third data processor are the same equipment.

35. The system as recited in any one of claims 19 to 33, wherein said first data processor counts a number of data packets passing through said first data processor, and uses said counted number for traffic control and billing.

36. A method of providing a communication service, comprising the steps of:
determining a first procedure to be executed by a second data processor based on data received from a third data processor via a first network; and
transmitting first data for execute the determined first procedure to the second data processor via the first network.

37. The method as recited in claim 36, wherein said step of determining the first procedure includes the step of selecting the first process among a plurality of procedures based on the data received from the third data processor.

38. The method as recited in claim 36 or 37,
wherein the determined first procedure includes a second procedure to be executed by a fourth data processor,
wherein the first data includes second data for making the fourth data processor execute the second process, and
wherein the second data processor transmits the second data to the fourth data processor via a second network.

39. The method as recited in claim 38, wherein the second procedure includes a procedure of requesting one of the second data processor and the fourth data processor to transmit third data stored in the one of the second data processor and the fourth data processor.

40. The method as recited in claim 38, wherein the second procedure includes a procedure of requesting the one of the second data processor and the fourth data processor to transmit the third data to the third data processor.

41. The method as recited in claim 40, further comprising the step of:
receiving the third data; and
converting and processing the received third data according to a predetermined procedure.

42. The method as recited in claim 41,
wherein the data received from the third data processor includes data relating to a function of the third data processor,
wherein the third data is independent of the function of the third data processor, and
wherein said step of converting and processing the received third data includes the step of making the third data adaptable for the function of the third data processor.

43. The method as recited in any one of claims 38 to 42, wherein the second data includes at least one of data used by the fourth data processor to execute the second procedure and a program for executing the second procedure.

44. The method as recited in claim 43, wherein the at least one of the data and the program is variable according to the second process, said method further comprising the step of:
transmitting the at least one of the data and the program to the fourth data processor after said step of determining the first procedure.

45. The method as recited in any one of claims 38 to 44, wherein a service performed with using the third data processor is provided by data communication with the second data processor via the first network, and by data communication between the second data processor and the fourth data processor via the second network.

46. The method as recited in claim 36 or 37, wherein the first procedure includes a procedure of directing the second data processor to transmit fourth data stored in the second data processor.

47. The method as recited in claim 46, wherein the first procedure includes a procedure of directing transmission of the fourth data to the third data processor.

48. The method as recited in claim 46, further comprising the steps of:
receiving the fourth data; and
converting and processing the received fourth data according to a predetermined procedure.

49. The method as recited in claim 48,
wherein the data received from the third data processor includes data relating to a function of the third data processor,
wherein the fourth data is independent of the function of the third data processor, and
wherein said step of converting and processing the received first data includes the step of making the fourth data adaptable for the function of the third data processor.

50. The method as recited in claim 36 or 37, wherein the second data includes at least one of data used by the second data processor to execute the first procedure and a program for executing the first procedure.

51. The method as recited in claim 50, wherein the at least one of the data and the program is variable according to the second procedure, said method further comprising the step of:
transmitting the at least one of the data and the program to the second data processor after said step of determining the first procedure based on the received data.

52. The method as recited in any one of claims 36 to 51, further comprising the steps of:
counting a number of data packets passing through the first data processor; and
using the counted number for traffic control and billing.

53. The method as recited in any one of claims 36 to 52, wherein the second data processor and the third data processor are the same equipment.

54. A program for executing said method as recited in any one of claims 36 to 52, said method being executed by said first data processor.

55. A recording medium storing said program as recited in claim 54, said recording medium being readable by the second data processor.

56. A method of providing a communication service, comprising the steps of:
receiving first data from a first data processor via a first network; and
executing a first procedure based on the first data,
wherein the first data processor determines the first procedure based on data received from a third data processor via the first network.

57. The method as recited in claim 56,
wherein the first data processor stores a plurality of procedures, and
wherein the first data processor selects the first process among the plurality of procedures based on the data received from the third data processor.

58. The method as recited in claim 56 or 57,
wherein the determined first procedure includes a second procedure to be executed by a fourth data processor, and
wherein the first data includes second data for making the fourth data processor execute the second process,
said method further comprising the step of:
transmitting the second data to the fourth data processor via a second network.

59. The method as recited in claim 58, wherein the second procedure includes a process of requesting transmission of third data to one of the third data processor and the first data processor.

60. The method as recited in claim 59, wherein the second procedure includes a process of requesting transmission of the third data stored in the fourth data processor to one of the third data processor and the first data processor.

61. The method as recited in claim 59,
wherein the first data processor receives the third data, and
wherein the first data processor converts and processes the received third data according to a predetermined procedure.

62. The method as recited in claim 61,
wherein the data received by the first data processor from the third data processor includes data relating to a function of the third data processor,
wherein the third data is independent of the function of the third data processor, and
wherein the first data processor makes the received third data adaptable for the function of the third data processor.

63. The method as recited in any one of claims 58 to 62, wherein the second data includes at least one of data used by the fourth data processor to execute the second procedure and a program for executing the second procedure.

64. The method as recited in claim 63,
wherein the at least one of the data and the program is variable according to the second procedure, and
wherein the first data processor transmits the at least one of the data and the program to the fourth data processor after determining the first procedure based on the received data.

65. The method as recited in any one of claims 58 to 64,
wherein a service performed with using the third data processor is provided by data communication with the first data processor via the first network, and by data communication with the fourth data processor via the second network.

66. The method as recited in claim 56 or 57, wherein the first procedure includes a procedure of directing transmission of fourth data to one of the third data processor and the first data processor.

67. The method as recited in claim 66,
wherein the first data processor receives the fourth data, and
wherein the first data processor converts and processes the received fourth data according to a predetermined procedure.

68. The method as recited in claim 67,
wherein the data received by the first data processor from the third data processor includes data relating to a function of the third data processor,
wherein the fourth data is independent of the function of the third data processor, and
wherein the first data processor makes the received fourth data adaptable for the function of the third data processor.

69. The method as recited in claim 56 or 57, wherein the second data includes at least one of data used to execute the first procedure and a program for executing the first procedure.

70. The method as recited in claim 69, wherein the at least one of the data and the program is variable according to the second procedure, said method further comprising the step of:
receiving the at least one of the data and the program from the first data processor after the first data processor determines the first procedure based on the received data.

71. The method as recited in any one of claims 56 to 71, wherein the first data processor counts a number of data packets passing through the first data processor, and uses the counted number for traffic control and billing.

72. A program for executing said method as recited in any one of claims 56 to 71, said method being executed by the second data processor.

73. A recording medium storing said program as recited in claim 72, said recording medium being readable by the second data processor.

74. A system of delivering content, comprising:
a content delivery reception for accepting a content delivery request from a content delivery client;
a first content delivery source connected with said content delivery reception via a network, for delivering a content in response to said content delivery request transferred from said content delivery reception; and
a content delivery destination connected with said content delivery reception and said first content delivery source via said network, said content delivery destination including a content receiver for receiving said delivered content,
wherein said content delivery reception accepts said content delivery request from a location different from said content delivery destination, and
wherein said content delivery request can specify a method of receiving said content.

75. The system as recited in claim 74, further comprising:
a second content delivery source for storing said content,
wherein said first content delivery source receives said content from said second content delivery source and delivers said content according to said content delivery request.

76. The system as recited in claim 74, further comprising:
a content recommendation section for analyzing a past use trend client and a use record of said content receiver of said content delivery, and for recommending said content and said content receiver to said content delivery client.

77. A system of delivering content, comprising:
a content delivery reception for accepting a content delivery request;
a content delivery source for delivering a content, said content delivery source connected with said content delivery reception via a network;
a content delivery destination for receiving said delivered content, said content delivery destination being connected with said content delivery reception and said content delivery source via said network; and
a plurality of content receivers connected with said content delivery destination,
wherein said content delivery source sends a content delivering program for delivering a content according to said content delivery request, and
wherein said content delivering program delivers said content from said content delivery source to a specified content receiver among said plurality of content receivers.

78. The system as recited in claim 77, wherein said content delivery reception receives address data for identifying a delivery destination of said content, information for identifying equipment of said content receiver, and authentication information.

79. A system for delivering content, comprising:
a content delivery reception for accepting a content delivery request;
a content delivery source having a content, said content delivery source being connected with said content delivery reception via a network,;
a content delivery proxy connected with said content delivery reception and said content delivery source via said network;.
a content delivery destination for receiving said delivered content, said content delivery destination being connected with said content delivery reception, said content delivery source, and said content delivery proxy via said network; and
a plurality of content receivers connected with said content delivery destination,
wherein a content delivering program is sent to said content delivery destination in order said content delivery proxy to obtain a content from said content delivery source and to deliver said content according to said content delivery request, and
said content delivering program delivers said content sent from said content delivery proxy to a specified content receiver among said plurality of content receivers.

80. The system as recited in claim 79, wherein said content delivery reception receives address data for identifying a delivery destination of said content, information for identifying equipment of said content receiver, and authentication information.

81. The system as recited in claim 79, wherein said content delivery proxy comprises:
an authentication information memory for storing authentication information for requesting a content from said content delivery source;
an authentication information transmitter for transmitting said stored authentication information to said content delivery source; and
a program transmitter for transmitting said delivering program.

82. A system for delivering content, comprising:
a content delivery reception for accepting a content delivery request;
a content delivery source for delivering a content, said content delivery source being connected with said content delivery reception via a network;
a content delivery destination for receiving said delivered content, said content delivery destination being connected with said content delivery reception and said content delivery source via said network;
a plurality of content receivers connected with said content delivery destination,
a content delivery client administrative database for storing a use history of said content delivery request; and
a content recommendation section for recommending a content based on said stored use history,
wherein said content delivery source sends a content delivering program for delivering a content according to said content delivery request, and
wherein said content delivering program delivers said content to a specified content receiver among said plurality of content receivers.

83. The system as recited in claim 82, wherein said content delivery reception includes said content recommendation section.
